# EUROPEAN PATENT APPLICATION

(11) **EP 4 346 143 A1**
(43) Date of publication of application: **03.04.2024**
(21) Application number: 22199128.4
(22) Date of filing: 30.09.2022
(51) Int. Cl.: H04L 5/00, H04L 5/14

(54) **USER EQUIPMENT AND BASE STATION INVOLVED IN TIME-DIVISION COMMUNICATION**

(71) Applicant: Panasonic Intellectual Property Corporation of America, Torrance, CA 90504 (US)
(72) Inventor: LI, Hongchao, 63225 Langen (DE); SUZUKI, Hidetoshi, Osaka, 571-8501 (JP); KUANG, Quan, 63225 Langen (DE); NUNOME, Tomoya, Miyagi, 981-3206 (JP)
(74) Representative: Grünecker Patent- und Rechtsanwälte PartG mbB

(57) **Abstract**

The present disclosure relates to a user equipment, UE, comprising the following. A receiver of receives a plurality of time-division configurations. A circuitry determines, for each of a plurality of time intervals, a communication direction, based on a first set of one or more time-division configurations among the previously-received plurality of time-division configurations. The receiver receives information on a full-duplex resource. The receiver receives a DCI message, including a configuration switch indication, which indicates one of the previously-received plurality of time-division configurations to be used. The circuitry determines, for each of one or more full-duplex time intervals of the full-duplex resource and respectively for a complete full-duplex frequency region of the full-duplex resource, a communication direction, based on a second set of one or more time-division configurations among the previously-received plurality of time-division configurations. The second set of time-division configurations at least includes the indicated time-division configuration.

## Description

### FIELD OF THE PRESENT DISCLOSURE

The present disclosure is directed to methods, devices and articles in communication systems, such as 3GPP communication systems.

### TECHNICAL BACKGROUND

Currently, the 3rd Generation Partnership Project (3GPP) works at the technical specifications for the new radio access technology - 5G NR (New Radio), which is also called fifth generation (5G) or NR and used interchangeably herein.

One objective is to provide a single technical framework addressing all usage scenarios, requirements and deployment scenarios (see e.g., section 6 of 3GPP TR 38.913 e.g., version 16.0.0 or version 17.0.0), at least including enhanced mobile broadband (eMBB), ultra-reliable low-latency communications (URLLC), and massive machine type communication (mMTC). For example, eMBB deployment scenarios may include indoor hotspot, dense urban, rural, urban macro and high speed; URLLC deployment scenarios may include industrial control systems, mobile health care (remote monitoring, diagnosis and treatment), real time control of vehicles, wide area monitoring and control systems for smart grids; mMTC deployment scenarios may include scenarios with large number of devices with non-time critical data transfers such as smart wearables and sensor networks. The services eMBB and URLLC are similar in that they both demand a very broad bandwidth, while they are different in that the URLLC service may preferably require ultra-low latencies.

A second objective is to achieve forward compatibility, which facilitates a completely new system design and/or the introduction of novel features.

### SUMMARY

One non-limiting and exemplary embodiment facilitates providing procedures for a UE to perform improved time-division communication procedures.

In an embodiment, the techniques disclosed here feature a user equipment, UE, comprising the following. A receiver of the UE receives a plurality of time-division configurations. A circuitry of the UE determines, for each of a plurality of time intervals, a communication direction, based on a first set of one or more time-division configurations among the previously-received plurality of time-division configurations. The receiver receives information on a full-duplex resource. The receiver receives a downlink control information, DCI, message, including a configuration switch indication. The configuration switch indication indicates one of the previously-received plurality of time-division configurations to be used. The circuitry determines, for each of one or more full-duplex time intervals of the full-duplex resource and respectively for a complete full-duplex frequency region of the full-duplex resource, a communication direction, based on a second set of one or more time-division configurations among the previously-received plurality of time-division configurations. The second set of time-division configurations at least includes the indicated time-division configuration.

It should be noted that general or specific embodiments may be implemented as a system, a method, an integrated circuit, a computer program, a storage medium, or any selective combination thereof. For instance, an integrated circuit can control a process of a UE or base station.

Additional benefits and advantages of the disclosed embodiments and different implementations will be apparent from the specification and figures. The benefits and/or advantages may be individually obtained by the various embodiments and features of the specification and drawings, which need not all be provided in order to obtain one or more of such benefits and/or advantages.

### BRIEF DESCRIPTION OF THE FIGURES

In the following exemplary embodiments are described in more detail with reference to the attached figures and drawings.
- **Fig.** 1: shows an exemplary architecture for a 3GPP NR system to which the improved procedures of the present disclosure may be applied;
- **Fig.** 2: is a schematic drawing that shows a functional split between NG Radio Access Network (NG-RAN) and 5G Core Network (5GC), to which the improved procedures of the present disclosure may be applied,
- **Fig. 3**: is a sequence diagram for Radio Resource Control (RRC) connection setup/reconfiguration procedures to which the improved procedures of the present disclosure may be applied,
- **Fig. 4**: is a schematic drawing showing usage scenarios of eMBB, mMTC and URLLC to which the improved procedures of the present disclosure may be applied,
- **Fig. 5**: is a block diagram showing an exemplary 3GPP NR system architecture for a non-roaming scenario,
- **Fig. 6**: illustrates the relationship between Bandwidth Parts, Control Resource Sets (CORESETS), search spaces, search space sets, and PDCCH candidates,
- **Fig. 7**: illustrates an exemplary time-domain structure in a communication system, such as 5G NR, including radio frames, subframes, slots, and OFDM symbols for different subcarrier spacings,
- **Fig. 8 and 9**: illustrate exemplary configurations of format of slots and symbols and exemplary communication directions therein,
- **Fig. 10**: illustrates the result of a combination of a cell-common TDD configuration and a UE-dedicated TDD configuration,
- **Fig. 11**: illustrates the result of a combination of a cell-common TDD configuration and a DCI-based TDD configuration,
- **Fig. 12**: illustrates the half-duplex operation for UEs, and the subband full-duplex operation at the gNB,
- **Fig. 13**: illustrates variable and fixed frequency resources in different time periods of a subband full-duplex resource,
- **Fig. 14**: illustrates a problematic collision of uplink and downlink resources of two different UEs in the same subband full-duplex resource, ,
- **Fig. 15**: illustrates an exemplary and simplified structure of a UE and a gNB,
- **Fig. 16**: illustrates a structure of the UE according to an exemplary implementation of the improved time-division communication procedure,
- **Fig. 17**: illustrates a flow diagram for the UE behavior according to an exemplary implementation of the improved time-division communication procedure,
- **Fig. 18**: illustrates a structure of the base station according to an exemplary implementation of the improved time-division communication procedure,
- **Fig. 19**: illustrates a flow diagram for the base station behavior according to an exemplary implementation of the improved time-division communication procedure,
- **Fig. 20**: is a signaling diagram illustrating an exemplary exchange between the UE and the gNB for an exemplary implementation of the improved time-division communication procedure,
- **Fig. 21**: illustrates the resulting TDD communication directions within and outside an SBFD resource, when applying an exemplary implementation of the improved time-division communication procedure to a first scenario,
- **Fig. 22**: illustrates the resulting TDD communication directions within and outside an SBFD resource, when applying an exemplary implementation of the improved time-division communication procedure to a second scenario,
- **Fig. 23**: illustrates the resulting TDD communication directions within and outside an SBFD resource, when applying an exemplary implementation of the improved time-division communication procedure to a variant of the second scenario,
- **Fig. 24**: illustrates the resulting TDD communication directions within and outside an SBFD resource, when applying an exemplary implementation of the improved time-division communication procedure to a third scenario,
- **Fig. 25**: illustrates the resulting TDD communication directions within and outside an SBFD resource, when applying an exemplary implementation of the improved time-division communication procedure to a variant of the third scenario,
- **Fig. 26**: illustrates the resulting TDD communication directions within and outside an SBFD resource, when applying an exemplary implementation of the improved time-division communication procedure to a first scenario, and
- **Fig. 27**: illustrates the resulting TDD communication directions within and outside an SBFD resource, when applying an exemplary implementation of the improved time-division communication procedure to a first scenario.

### DETAILED DESCRIPTION

### 5G NR system architecture and protocol stacks

3GPP has been working at the next release for the 5^{th} generation cellular technology, simply called 5G, including the development of a new radio access technology operating in frequencies ranging up to 100 GHz. The first version of the 5G standard was completed at the end of 2017, which allows proceeding to 5G NR standard-compliant trials and commercial deployments of smartphones.

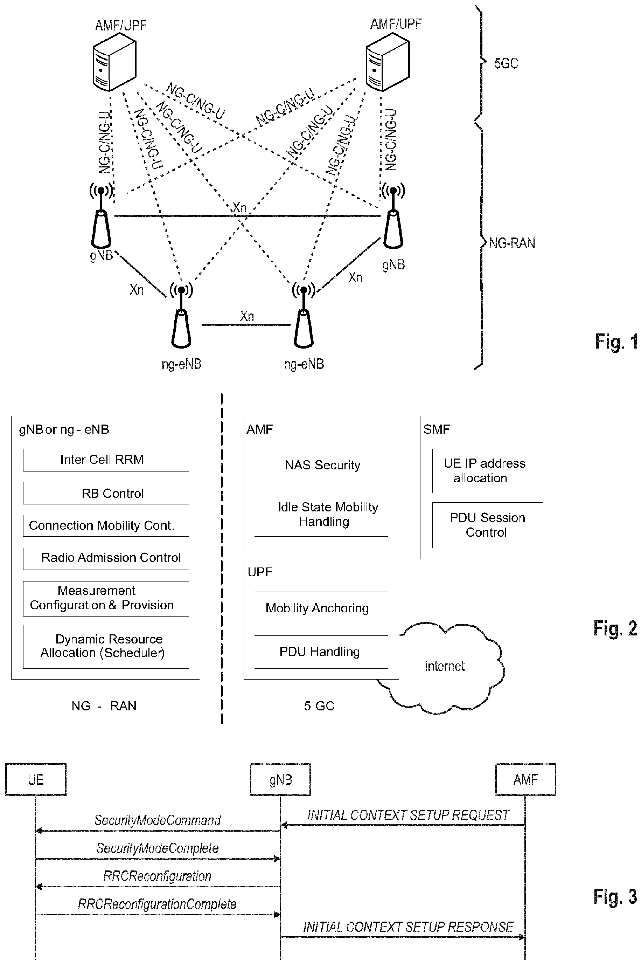

Among other things, the overall system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the 5GC, more specifically to the AMF (Access and Mobility Management Function) (e.g., a particular core entity performing the AMF) by means of the NG-C interface and to the UPF (User Plane Function) (e.g., a particular core entity performing the UPF) by means of the NG-U interface. The NG-RAN architecture is illustrated in **Fig. 1** (see e.g., 3GPP TS 38.300 e.g., v17.1.0, section 4).

The user plane protocol stack for NR (see e.g., 3GPP TS 38.300, section 4.4.1) comprises the PDCP (Packet Data Convergence Protocol, see section 6.4 of 3GPP TS 38.300), RLC (Radio Link Control, see section 6.3 of TS 38.300) and MAC (Medium Access Control, see section 6.2 of TS 38.300) sublayers, which are terminated in the gNB on the network side. Additionally, a new access stratum (AS) sublayer (SDAP, Service Data Adaptation Protocol) is introduced above PDCP (see e.g., sub-clause 6.5 of TS 38.300). A control plane protocol stack is also defined for NR (see for instance TS 38.300, section 4.4.2). An overview of the Layer 2 functions is given in sub-clause 6 of TS 38.300. The functions of the RRC layer are listed in sub-clause 7 of TS 38.300.

For instance, the Medium-Access-Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. It also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. For instance, the physical channels are PRACH (Physical Random Access Channel), PUSCH (Physical Uplink Shared Channel) and PUCCH (Physical Uplink Control Channel) for uplink and PDSCH (Physical Downlink Shared Channel), PDCCH (Physical Downlink Control Channel) and PBCH (Physical Broadcast Channel) for downlink.

Use cases / deployment scenarios for NR could include enhanced mobile broadband (eMBB), ultra-reliable low-latency communications (URLLC), massive machine type communication (mMTC), which have diverse requirements in terms of data rates, latency, and coverage. For example, eMBB is expected to support peak data rates (20Gbps for downlink and 10Gbps for uplink) and user-experienced data rates in the order of three times what is offered by IMT-Advanced. On the other hand, in case of URLLC, the tighter requirements are put on ultra-low latency (0.5ms for UL and DL each for user plane latency) and high reliability (1-10⁻⁵ within 1ms). Finally, mMTC may preferably require high connection density (1,000,000 devices/km² in an urban environment), large coverage in harsh environments, and extremely long-life battery for low cost devices (15 years).

Therefore, the OFDM numerology (e.g., subcarrier spacing, OFDM symbol duration, cyclic prefix (CP) duration, number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacing of 15 kHz, 30 kHz, 60 kHz... are being considered at the moment. The symbol duration Tᵤ and the subcarrier spacing Δf are directly related through the formula Δf = 1 / Tᵤ. In a similar manner as in LTE systems, the term "resource element" can be used to denote a minimum resource unit being composed of one subcarrier for the length of one OFDM/SC-FDMA symbol.

In the new radio system 5G-NR for each numerology and carrier a resource grid of subcarriers and OFDM symbols is defined respectively for uplink and downlink. Each element in the resource grid is called a resource element and is identified based on the frequency index in the frequency domain and the symbol position in the time domain (see 3GPP TS 38.211 e.g., v17.2.0, e.g., section 4). For instance, downlink and uplink transmissions are organized into frames with 10ms duration, each frame consisting of ten subframes of respectively 1ms duration. In 5g NR implementations the number of consecutive OFDM symbols per subframe depends on the subcarrier-spacing configuration. For example, for a 15-kHz subcarrier spacing, a subframe has 14 OFDM symbols (similar to an LTE-conformant implementation, assuming a normal cyclic prefix). On the other hand, for a 30-kHz subcarrier spacing, a subframe has two slots, each slot comprising 14 OFDM symbols.

### 5G NR functional split between NG-RAN and 5GC

**Fig. 2** illustrates functional split between NG-RAN and 5GC. NG-RAN logical node is a gNB or ng-eNB. The 5GC has logical nodes AMF, UPF and SMF.

In particular, the gNB and ng-eNB host the following main functions:
- Functions for Radio Resource Management such as Radio Bearer Control, Radio Admission Control, Connection Mobility Control, Dynamic allocation of resources to UEs in both uplink and downlink (scheduling);
- IP header compression, encryption and integrity protection of data;
- Selection of an AMF at UE attachment when no routing to an AMF can be determined from the information provided by the UE;
- Routing of User Plane data towards UPF(s);
- Routing of Control Plane information towards AMF;
- Connection setup and release;
- Scheduling and transmission of paging messages;
- Scheduling and transmission of system broadcast information (originated from the AMF or OAM);
- Measurement and measurement reporting configuration for mobility and scheduling;
- Transport level packet marking in the uplink;
- Session Management;
- Support of Network Slicing;
- QoS Flow management and mapping to data radio bearers;
- Support of UEs in RRC_INACTIVE state;
- Distribution function for NAS messages;
- Radio access network sharing;
- Dual Connectivity;
- Tight interworking between NR and E-UTRA.

The Access and Mobility Management Function (AMF) hosts the following main functions:
- Non-Access Stratum, NAS, signalling termination;
- NAS signalling security;
- Access Stratum, AS, Security control;
- Inter Core Network, CN, node signalling for mobility between 3GPP access networks;
- Idle mode UE Reachability (including control and execution of paging retransmission);
- Registration Area management;
- Support of intra-system and inter-system mobility;
- Access Authentication;
- Access Authorization including check of roaming rights;
- Mobility management control (subscription and policies);
- Support of Network Slicing;
- Session Management Function, SMF, selection.

Furthermore, the User Plane Function, UPF, hosts the following main functions:
- Anchor point for Intra-/Inter-RAT mobility (when applicable);
- External PDU session point of interconnect to Data Network;
- Packet routing & forwarding;
- Packet inspection and User plane part of Policy rule enforcement;
- Traffic usage reporting;
- Uplink classifier to support routing traffic flows to a data network;
- Branching point to support multi-homed PDU session;
- QoS handling for user plane, e.g., packet filtering, gating, UL/DL rate enforcement;
- Uplink Traffic verification (SDF to QoS flow mapping);
- Downlink packet buffering and downlink data notification triggering.

Finally, the Session Management function, SMF, hosts the following main functions:
- Session Management;
- UE IP address allocation and management;
- Selection and control of UP function;
- Configures traffic steering at User Plane Function, UPF, to route traffic to proper destination;
- Control part of policy enforcement and QoS;
- Downlink Data Notification.

### RRC connection setup and reconfiguration procedures

**Fig. 3** illustrates some interactions between a UE, gNB, and AMF (a 5GC entity) in the context of a transition of the UE from RRC_IDLE to RRC_CONNECTED for the NAS part (see 3GPP TS 38.300).

RRC is a higher layer signaling (protocol) used for UE and gNB configuration. In particular, this transition may involve that the AMF prepares the UE context data (including e.g., PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5GC is provided that comprises circuitry which, in operation, establishes a Next Generation (NG) connection with a gNodeB; and a transmitter which, in operation, transmits an initial context setup message, via the NG connection, to the gNodeB to cause a signaling radio bearer setup between the gNodeB and a user equipment (UE). In particular, the gNodeB transmits an RRC signaling containing a resource allocation configuration information element (IE) to the UE via the signaling radio bearer. The UE then performs an uplink transmission or a downlink reception based on the resource allocation configuration.

### Usage Scenarios of IMT for 2020 and beyond

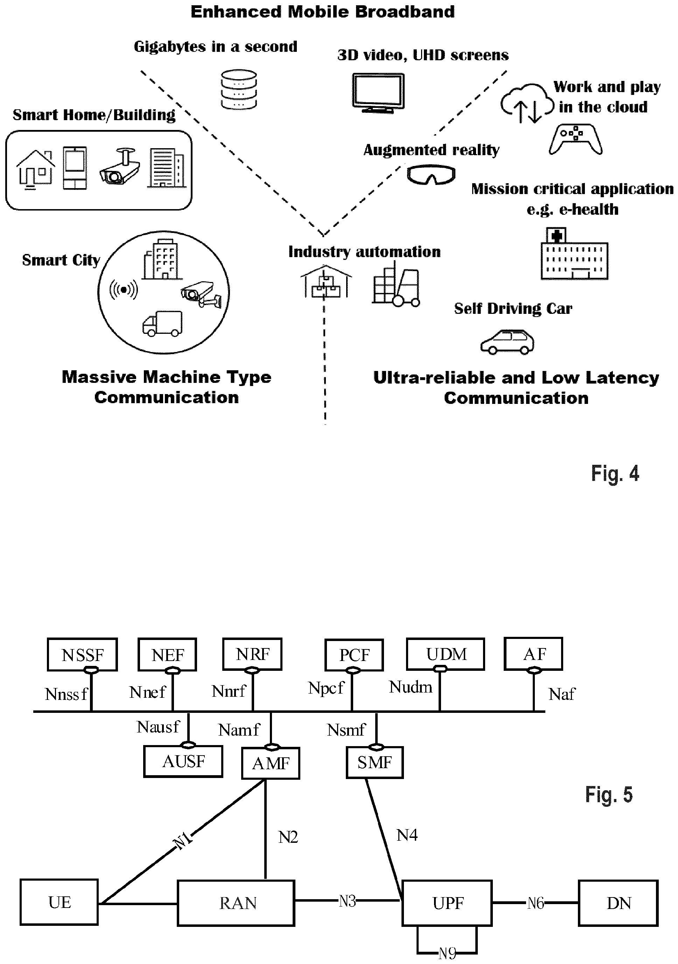

**Fig. 4** illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications. Fig. 4 illustrates some examples of envisioned usage scenarios for IMT for 2020 and beyond (see e.g., ITU-R M.20183 Fig. 2).

The URLLC use case has stringent requirements for capabilities such as throughput, latency and availability and has been envisioned as one of the enablers for future vertical applications such as wireless control of industrial manufacturing or production processes, remote medical surgery, distribution automation in a smart grid, transportation safety, etc. Ultra-reliability for URLLC is to be supported by identifying the techniques to meet the requirements set by 3GPP TR 38.913. For NR URLLC in Release 15, key requirements include a target user plane latency of 0.5 ms for UL (uplink) and 0.5 ms for DL (downlink). The general URLLC requirement for one transmission of a packet is a BLER (block error rate) of 1E-5 for a packet size of 32 bytes with a user plane latency of 1ms.

From the physical layer perspective, reliability can be improved in a number of possible ways. The current scope for improving the reliability involves defining separate CQI tables for URLLC, more compact DCI formats, repetition of PDCCH, etc. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency / higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, and especially necessary for URLLC and mMTC, is high reliability or ultra-reliability. Several mechanisms can be considered to improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability in general, regardless of particular communication scenarios.

For NR URLLC, further use cases with tighter requirements have been identified such as factory automation, transport industry and electrical power distribution, including factory automation, transport industry, and electrical power distribution. The tighter requirements are higher reliability (up to 10⁶ level), higher availability, packet sizes of up to 256 bytes, time synchronization down to the order of a few µs where the value can be one or a few µs depending on frequency range and short latency in the order of 0.5 to 1 ms in particular a target user plane latency of 0.5 ms, depending on the use cases.

Moreover, for NR URLLC, several technology enhancements from physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also, PUSCH enhancements related to mini-slot level hopping and retransmission/repetition enhancements have been identified. The term "mini-slot" refers to a Transmission Time Interval (TTI) including a smaller number of symbols than a slot (a slot comprising fourteen symbols).

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so), e.g., as shown above with reference to Fig. 3. The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

**Fig. 5** illustrates a 5G NR non-roaming reference architecture (see e.g., 3GPP TS 23.501 e.g., v16.9.0, section 4.2.3, see also v17.5.0). An Application Function (AF), e.g., an external application server hosting 5G services, exemplarily described in Fig. 4, interacts with the 3GPP Core Network in order to provide services, for example to support application influence on traffic routing, accessing Network Exposure Function (NEF) or interacting with the Policy framework for policy control (see Policy Control Function, PCF), e.g., QoS control. Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

Fig. 5 shows further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN), e.g., operator services, Internet access or 3rd party services. All of or a part of the core network functions and the application services may be deployed and running on cloud computing environments.

In the present disclosure, thus, an application server (for example, AF of the 5G architecture), is provided that comprises a transmitter, which, in operation, transmits a request containing a QoS requirement for at least one of URLLC, eMBB and mMTC services to at least one of functions (for example NEF, AMF, SMF, PCF,UPF, etc.) of the 5GC to establish a PDU session including a radio bearer between a gNodeB and a UE in accordance with the QoS requirement and circuitry, which, in operation, performs the services using the established PDU session.

### Bandwidth Parts - BWP

NR systems will support much wider maximum channel bandwidths than LTE's 20 MHz bandwidth (e.g. 100 MHz). Wideband communication is also supported in LTE via carrier aggregation (CA) of up to 20-MHz component carriers. By defining wider channel bandwidths in NR, it is possible to dynamically allocate frequency resources via scheduling, which can be more efficient and flexible than the Carrier Aggregation operation of LTE, whose activation/deactivation is based on MAC Control Elements. Having a single wideband carrier also has merits in terms of low control overhead, as it needs only a single control signaling (Carrier Aggregation requires separate control signaling per each aggregated carrier).

Moreover, like LTE, NR may also support the aggregation of multiple carriers via carrier aggregation or dual connectivity.

Since UEs are not always demanding high data rates, the use of a wide bandwidth may incur higher idling power consumption both from RF and baseband signal processing perspectives. In this regard, a newly developed concept of bandwidth parts for NR provides a means of operating UEs with smaller bandwidths than the configured channel bandwidth, so as to provide an energy-efficient solution despite the support of wideband operation. Any low-end terminal, which cannot access the whole bandwidth for NR, can benefit therefrom.

A bandwidth part (BWP) is a subset of the total cell bandwidth of a cell, e.g. defined by the location and number of contiguous physical resource blocks (PRBs). It may be defined separately for uplink and downlink. Furthermore, each bandwidth part can be associated with a specific OFDM numerology, e.g. with a subcarrier spacing and cyclic prefix. For instance, bandwidth adaptation is achieved by configuring the UE with BWP(s) and by telling the UE which one of the configured BWPs is currently the active one.

Exemplarily, in 5G NR, a specific BWP is configured only for a UE in RRC_Connected state. For instance, other than an initial BWP (e.g. respectively one for UL and one for DL), a BWP only exists for UEs in connected state. To support the initial data exchange between the UE and the network, e.g. during the process of moving a UE from RRC_IDLE or RRC_INACTIVE state to RRC_CONNECTED state, the initial DL BWP and initial UL BWP are configured in the minimum system information.

Although the UE can be configured with more than one BWP (e.g. up to 4 BWP per serving cell, as currently defined for NR), the UE has only one active DL BWP at a time.

More information on the BWP operation can be found in section 5.15 of 3GPP TS 38.321 e.g. v17.1.0.

Switching between configured BWPs may be achieved in different ways. Operation of Bandwidth parts in uplink and downlink is e.g. defined in a 5G NR compliant implementation in 3GPP 38.321 e.g. v17.1.0 section 5.15. BWPs can be switched for instance by means of downlink control information (DCIs) (e.g. using a Bandwidth part indicator in DCI format 0_1 (UL grant) and DCI format 1_1 (DL schedule)), using the *bwp-inactivity Timer,* using RRC signaling, and by the MAC entity itself upon initiation of the Random Access Procedure. For the Primary Cell (PCell), the initial BWP is the BWP used for initial access, and the default BWP is the initial one unless another initial BWP is explicitly configured. For a Secondary Cell (SCell), the initial BWP is always explicitly configured, and a default BWP may also be configured. When a default BWP is configured for a serving cell, the expiry of an inactivity timer associated to that cell switches the active BWP to the default one.

Some DCI formats do not contain the BWP ID (such as Formats 0_0 and 1_0), while in other DCI formats the number of bits for BWP ID is RRC-configurable and could be 0, 1, 2 bits (such as for Formats 0_1, 0_2, 1_1, and 1_2).

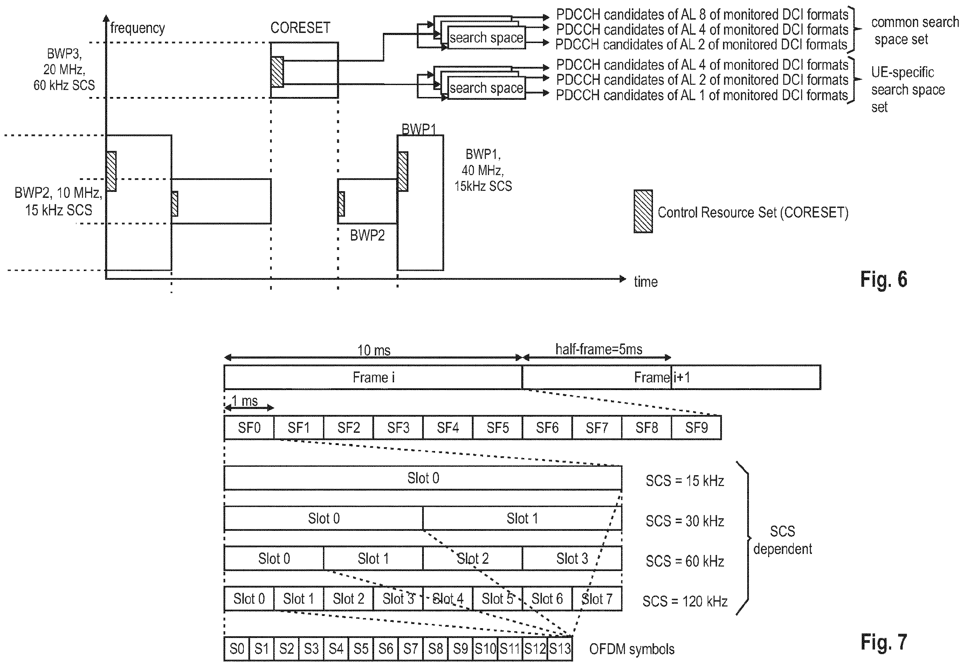

Fig. 6 illustrates a scenario where three different BWPs are configured, BWP1 with a frequency bandwidth of 40 MHz and a subcarrier spacing of 15 kHz, BWP2 with a width of 10 MHz and a subcarrier spacing of 15 kHz, and BWP3 with a width of 20 MHz and subcarrier spacing of 60 kHz.

The different BWPs can be e.g. configured using suitable information elements of the RRC protocol. A Carrier Bandwidth Part is a contiguous set of physical resource blocks, selected from a contiguous subset of the common resource blocks for a given numerology(u) on a given carrier.

According to one exemplary 5G NR compatible implementation in line with 3GPP 38.331 e.g. v17.1.0, different RRCReconfiguration information elements can be used.

### Control information - Search space sets

PDCCH monitoring is done by the UE so as to identify and receive information intended for the UE, such as the control information as well as the user traffic (e.g. the DCI on the PDCCH, and the user data on the PDSCH indicated by the PDCCH).

Control information in the downlink (can be termed, e.g., downlink control information, DCI) has basically the same purpose in 5G NR as the DCI in LTE, namely being a special set of control information that e.g. schedules a downlink data channel (e.g. the PDSCH) or an uplink data channel (e.g. PUSCH). In an exemplary 5G NR compliant implementation, there are a number of different DCI formats defined already (see TS 38.212 e.g. v17.2.0 section 7.3.1). An overview is given by the following table.

| **DCI format** | **Usage** |
|---|---|
| 0_0 | Scheduling of PUSCH in one cell |
| 0_1 | Scheduling of one or multiple PUSCH in one cell, or indicating downlink feedback information for configured grant PUSCH (CG-DFI) |
| 0 2 | Scheduling of PUSCH in one cell |
| 1 0 | Scheduling of PDSCH in one cell |
| 1_1 | Scheduling of one or multiple PDSCH in one cell, and/or triggering one shot HARQ-ACK codebook feedback |
| 1_2 | Scheduling of PDSCH in one cell |
| 2_0 | Notifying a group of UEs of the slot format, available RB sets, COT duration and search space set group switching |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions bv one or more UEs |
| 2_4 | Notifying a group of UEs of the PRB(s) and OFDM symbol(s) where UE cancels the corresponding UL transmission from the UE |
| 2_5 | Notifying the availability of soft resources as defined in Clause 9.3.1 of [10, TS 38.4731 |
| 2_6 | Notifying the power saving information outside DRX Active Time for one or more UEs |
| 2_7 | Notifying paging early indication and TRS availability indication for one or more UEs |
| 3_0 | Scheduling of NR sidelink in one cell |
| 3_1 | Scheduling of LTE sidelink in one cell |
| 4_0 | Schedulng of PDSCH with CRC scrambled by MCCH-RNTI/G-RNTI for broadcast |
| 4_1 | Schedulng of PDSCH with CRC scrambled by G-RNTI/G-CS-RNTI for multicast |
| 4_2 | Schedulng of PDSCH with CRC scrambled by G-RNTI/G-CS-RNTI for multicast |

According to the exemplary implementation of TS 38.212, DCI format 2_0 is used for notifying the slot format, COT duration, available RB set, and search space set group switching.

The following information is transmitted by means of the DCI format 2_0 with CRC scrambled by SFI-RNTI:
- If the higher layer parameter *slotFormatCombToAddModList* is configured,
   - Slot format indicator 1, Slot format indicator 2, ..., Slot format indicator N,
- If the higher layer parameter *availableRB-SetsToAddModList* is configured,
   - Available RB set Indicator 1, Available RB set Indicator 2, ..., Available RB set Indicator *N1,*
- If the higher layer parameter *co-DurationsPerCellToAddModList* is configured
   - COT duration indicator 1, COT duration indicator 2, ..., COT duration indicator N2.
- If the higher layer parameter *switchTriggerToAddModList* is configured
   - Search space set group switching flag 1, Search space set group switching flag 2, ..., Search space set group switching flag M.

The size of DCI format 2_0 is configurable by higher layers up to 128 bits, according to Clause 11.1.1 of TS 38.213.

In 5G NR, PDCCH is transmitted in radio resource regions called control resource sets (CORESETs). In LTE, the concept of a CORESET is not explicitly present. Instead, PDCCH in LTE uses the full carrier bandwidth in the first 1-3 OFDM symbols (four for the most narrowband case). By contrast, a CORESET in 5G NR can occur at any position within a slot and anywhere in the frequency range of the carrier, except that the UE is not expected to handle CORESETs outside its active bandwidth part (BWP).

Accordingly, a UE performs a monitoring operation of the PDCCH, e.g. as defined in 3GPP TS 38.213 e.g. version 17.2.0, sections 10 and 11. As exemplarily defined therein, the UE monitors a set of PDCCH candidates, which is defined in terms of PDCCH search space sets. A search space set can be a common search space set (CSS set) or a UE-specific search space set (USS set).

Search space sets are monitored in one or more CORESETs on the active DL BWP on each activated serving cell configured with PDCCH monitoring using the corresponding search space sets, where monitoring implies decoding each PDCCH candidate according to the monitored DCI formats.

Conceptually, **Fig. 6** provides an exemplary illustration of the relationship between bandwidth parts, CORESETS, search spaces, search space sets and the PDCCH candidates that a UE can monitor. As apparent from Fig. 6, one CORESET is illustrated per BWP, although more than one are possible. Each CORESET can then have several search spaces of one or more PDCCH candidates of a particular Aggregation Level (such as AL2, 4 or 8), which in turn can then be grouped into a search space set, such as a common SS set and a UE-specific SS set.

### Time-domain structure in 5G NR

In the time domain, transmissions in 5G NR are organized into frames of length 10ms, each of which is divided into 10 equally sized subframes of length 1ms. A subframe in turn is divided into one or more slots consisting of 14 OFDM symbols each. The duration of a slot in milliseconds depends on the numerology. For instance, for the 15 kHz subcarrier spacing, an NR slot thus has the same structure as an LTE subframe with normal cyclic prefix. A subframe in 5G NR serves as a numerology-independent time reference, which is useful, especially in the case of multiple numerologies being mixed on the same carrier, while a slot is the typical dynamic scheduling unit. This frame structure, on which the 3GPP 5G NR communication is based, is illustrated exemplarily in **Fig. 7****.** Further exemplary details of the frame structure can be obtained from 3GPP TS 38.211 v 17.2.0, section 4.3 "Frame structure" further including section 4.3.2 for "Slots".

### Time-domain duplex and slot format

The two key duplex schemes used in mobile communications are Frequency Division Duplex (FDD) and Time Division Duplex (TDD). Traffic patterns are changing and very specific to a particular use case, including not only downlink-heavy applications (such as steaming) but also uplink-heavy applications (such as cloud storage and personal broadcasting). To increase flexibility as well as make the spectrum usage more efficient, time-division duplex (TDD) is useful. TDD uses the same frequency for each direction but separates the communication by using different time periods, e.g. a frame including different time periods and slots for uplink or downlink communications.

To utilize the spectrum most efficiently and avoid interference, all TDD operating in the same frequency range and within the same area have to be synchronized. This includes that base stations need to transmit at the same time periods, and all devices should only transmit in dedicated time periods. To said end, terminals can be configured with the particular transmission directions of the time periods.

In LTE TDD, if a subframe (equivalent to a slot in NR) is configured for DL or UL, all of the symbols within the subframe should be used as DL or UL. But in 5G NR, each of the symbols within a slot can be configured differently, e.g. as downlink (termed DL or D, in the following) or uplink (termed UL or U, in the following). Also flexible symbols exist (termed F in the following), which can be used as either DL or UL, depending on further UE operation.

Each UE can then configured by its base station as to the transmission direction of the slots and the symbols within each slot. For instance, the UE follows UL or DL scheduling DCIs (e.g. DCI formats 0_0/0_1/0_2/1_0/1_1/1_2) to decide on whether to transmit or receive in such a flexible symbol.

Conceptually, the base station and the UE thus have a common understanding on the transmission directions on slots and symbols for TDD operation.

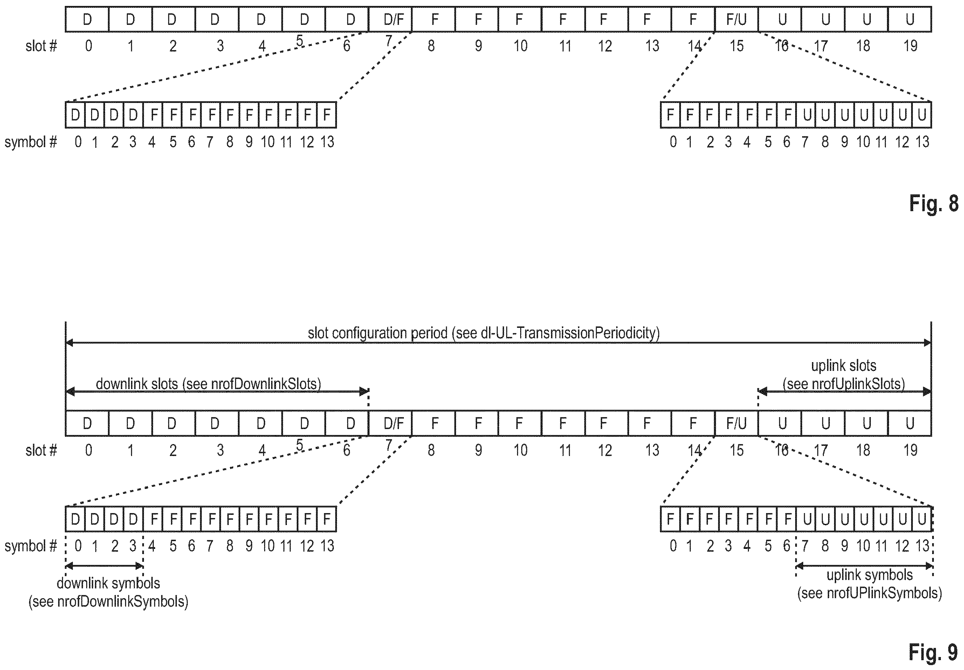

**Fig. 8** illustrates an exemplary format of the slots and symbols. As apparent from this example, slots 0-6 are downlink slots, in which all symbols are configured for a downlink direction. Slot 7 is a mixed flexible/downlink slot, in which the first 4 symbols are exemplarily assumed to be symbols of a downlink direction, wherein the remaining symbols in said slot are of a flexible direction (i.e. can be eventually used for downlink or uplink). Slots 8-14 are flexible slots, in which all symbols are of a flexible direction. Slot 15 is a mixed flexible/uplink slots, in which the last 7 symbols are exemplarily assumed to be symbols of an uplink direction. Finally, slots 16-19 are uplink slots, in which all symbols are configured for an uplink direction.

In the following a more specific exemplary implementation of TDD according to 5G NR will be explained. 5G NR at present uses particular mechanisms for defining the transmission directions of slots and symbols and other particular mechanisms for signaling the defined transmission directions of slots and symbols to the UE(s). Based on the information, the UE can then apply a rule on how to determine the actual transmission direction for a slot or symbol.

In this exemplary 5G-NR implementation, three different TDD configuration mechanisms are supported:
1) Semi-static TDD configuration on a cell common basis, by SIB or RRC
2) Semi-static TDD configuration on a UE-specific basis, by RRC
3) Dynamic TDD configuration for a UE or group of UEs, by dynamic (e.g. DCI) scheduling

### 1) semi-static, cell-common, TDD configuration

Higher-layer signaling, e.g. system information block SIB1 (e.g. the *ServingCellConfigCommonSIB* information element (IE)) or an RRC message (e.g. including the *ServingCellConfigCommon* IE), can be used to provide an information element to the UE, termed *TDD-UL-DL-ConfigCommon,* including information on the TDD configuration.

The information element TDD-UL-DL-ConfigCommon as currently defined in TS 38.331 v17.1.0 is presented in the following.

### - TDD-UL-DL-ConfigCommon

The IE *TDD-UL-DL-ConfigCommon* determines the cell specific Uplink/Downlink TDD configuration.

### TDD-UL-DL-ConfigCommon information element

```
 -- ASN1START
 -- TAG-TDD-UL-DL-CONFIGCOMMON-START
 TDD-UL-DL-ConfigCommon ::= SEQUENCE {
     referenceSubcarrierSpacing SubcarrierSpacing,
     pattern1 TDD-UL-DL-Pattern,
     pattern2 TDD-UL-DL-Pattern OPTIONAL, -- Need R
 }
 TDD-UL-DL-Pattern ::= SEQUENCE {
     dl-UL-TransmissionPeriodicity ENUMERATED {ms0p5, ms0p625, ms1,
     mslp25, ms2, ms2p5, ms5, ms10},
     nrofDownlinkSlots INTEGER (0..maxNrofSlots),
     nrofDownlinkSymbols INTEGER (0..maxNrofSymbols-1),
     nrofUplinkSlots INTEGER (0..maxNrofSlots),
     nrofUplinkSymbols INTEGER (0..maxNrofSymbols-1),
     ..., [[
     dl-UL-TransmissionPeriodicity-v1530 ENUMERATED {ms3, ms4} OPTIONAL -Need R
     ] ]
 }
 -- TAG-TDD-UL-DL-CONFIGCOMMON-STOP
 -- ASN1STOP
```

| ***TDD-UL-DL-ConfigCommon* field descriptions** |
|---|
| ***referenceSubcarrierSpacing*** |
| Reference SCS used to determine the time domain boundaries in the UL-DL pattern which must be common across all subcarrier specific carriers, i.e., independent of the actual subcarrier spacing using for data transmission. Only the following values are applicable depending on the used frequency: |
| FR1: 15, 30, or 60 kHz |
| FR2-1: 60 or 120 kHz |
| FR2-2: 120, 480, or 960 kHz |
| The network configures a not larger than any SCS of configured BWPs for the serving cell. The network or SL-*PreconfigGeneral* configures a not larger than the SCS of (pre-)configured SL BWP.See TS 38.213 [13], clause 11.1. |

| ***TDD-UL-DL-Pattern* field descriptions** |
|---|
| ***dl-UL- TransmissionPeriodicity*** |
| Periodicity of the DL-UL pattern, see TS 38.213 [13], clause 11.1. If the *dl-UL-TransmissionPeriodicity-v1530* is signalled, UE shall ignore the *dl-UL-TransmissionPeriodicity* (without suffix). |

| ***nrofDownlinkSlots*** |
|---|
| Number of consecutive full DL slots at the beginning of each DL-UL pattern, see TS 38.213 [13], clause 11.1. In this release, the maximum value for this field is 80. |

| ***nrofDownlinkSymbols*** |
|---|
| Number of consecutive DL symbols in the beginning of the slot following the last full DL slot (as derived from *nrofDownlinkSlots).* The value 0 indicates that there is no partial-downlink slot. (see TS 38.213 [13], clause 11.1). |

| ***nrofUplinkSlots*** |
|---|
| Number of consecutive full UL slots at the end of each DL-UL pattern, see TS 38.213 [13], clause 11.1. In this release, the maximum value for this field is 80. |

| ***nrofUplinkSymbols*** |
|---|
| Number of consecutive UL symbols in the end of the slot preceding the first full UL slot (as derived from *nrofUplinkSlots).* The value 0 indicates that there is no partial-uplink slot. (see TS 38.213 [13], clause 11.1). |

As apparent from the above example cell-specific TDD configuration, the parameter *dl-UL-TransmissionPeriodicity* defines the slot configuration period in milliseconds to which the TDD configuration applies. Within the slot configuration period, slots and symbols are defined over a period of time as being either UL, DL or Flexible, based on a combination of the parameters *nrofDownlinkSlots, nrofDownlinkSymbols, nrofUplinkSlots* and *nrofUplinkSymbols.*

Two different patterns (pattern1 and pattern2) can thus be defined, while pattern1 is mandatory and pattern2 is optional. Both patterns can contain the same parameters, which usually different values. If both patterns are configured in *TDD-UL-DL-ConfigCommon,* then the UE sets the slot format per slot over a first set of slots as indicated in pattern 1, and sets the slot format per slot over a second set of slots as indicated in pattern 2.

One example of such a semi-static cell-specific configuration is illustrated in **Fig. 9****.** As apparent from said Fig. 9, a slot configuration period of 20 slots in total is assumed, e.g. resulting from a dl-UL-TransmissionPeriodicity of 2.5 ms, and a µ=3, based on the formula S = P * 2^{µ}. The parameter nrofDownlinkSlots is set to 7, resulting in that the first 7 slots of the slot configuration period are downlink slots, respectively including only downlink symbols. The parameter nrofDownlinkSymbols is set to 4, resulting in that the first slot after the last full DL slot (here slot 7) begins with 4 DL symbols. The remaining symbols of slot 7 are not defined as D, and thus are considered flexible F.

The parameter nrofUplinkSlots is set to 4, resulting in that the last 4 slots of the slot configuration period are uplink slots, respectively including only uplink symbols. The parameter nrofUplinkSymbols is set to 7, resulting in that slot directly preceding the first full UL slot (here slot 15) ends with 7 UL symbols. The remaining symbols of slot 15 are not defined as UL, and thus are considered flexible F.

Furthermore, the remaining slots of the slot configuration period are flexible slots, thus including flexible symbols.

### 2) semi-static, UE-specific, TDD configuration

Further the above cell-common TDD configuration, the use of the IE *TDD-UL-DL-ConfigDedicated* allows the network to further configure the flexible slots defined by the cell-common TDD configuration (see above IE TDD-UL-DL-ConfigCommon), for example to adjust same to the traffic requirements of a UE. Said IE *TDD-UL-DL-ConfigDedicated* can be transmitted from the base station to the UE, e.g. using an RRC message, e.g. as part of the IE *ServingCellConfig* (in turn used to configure a UE with a serving cell).

The information element *TDD-UL-DL-ConfigDedicated* as currently defined in TS 38.331 v17.1.0 is presented in the following.

### - TDD-UL-DL-ConfigDedicated

The IE *TDD-UL-DL-ConfigDedicated* determines the UE-specific Uplink/Downlink TDD configuration.

### TDD-UL-DL-ConfigDedicated information element

```
 -- ASN1START
 -- TAG-TDD-UL-DL-CONFIGDEDICATED-START
 TDD-UL-DL-ConfigDedicated ::= SEQUENCE {
     slotSpecificConfigurationsToAddModList SEQUENCE (SIZE
 (1..maxNrofSlots)) OF TDD-UL-DL-SlotConfig OPTIONAL, -- Need N
     slotSpecificConfigurationsToReleaseList SEQUENCE (SIZE
 (1..maxNrofSlots)) OF TDD-UL-DL-SlotIndex OPTIONAL, -- Need N
 }
 TDD-UL-DL-ConfigDedicated-IAB-MT-r16::= SEQUENCE {
     slotSpecificConfigurationsToAddModList-IAB-MT-r16 SEQUENCE (SIZE
 (1..maxNrofSlots)) OF TDD-UL-DL-SlotConfig-IAB-MT-r16 OPTIONAL, -- Need N
     slotSpecificConfigurationsToReleaseList-IAB-MT-r16 SEQUENCE (SIZE
 (1..maxNrofSlots)) OF TDD-UL-DL-SlotIndex OPTIONAL, -- Need N
 }
 TDD-UL-DL-SlotConfig ::= SEQUENCE {
     slotIndex TDD-UL-DL-SlotIndex,
     symbols CHOICE {
         allDownlink NULL,
         allUplink NULL,
         explicit SEQUENCE {
              nrofDownlinkSymbols INTEGER (1..maxNrofSymbols-1)
              OPTIONAL, -- Need S
              nrofUplinkSymbols INTEGER (1..maxNrofSymbols-1)
              OPTIONAL -- Need S
          }
     }
 }
 TDD-UL-DL-SlotConfig-IAB-MT-r16::= SEQUENCE {
     slotIndex-r16 TDD-UL-DL-SlotIndex,
     symbols-IAB-MT-r16 CHOICE {
         allDownlink-r16 NULL,
         allUplink-r16 NULL,
         explicit-r16 SEQUENCE {
              nrofDownlinkSymbols-r16 INTEGER
 (1..maxNrofSymbols-1)OPTIONAL, -- Need S
              nrofUplinkSymbols-r16 INTEGER
 (1..maxNrofSymbols-1)OPTIONAL -- Need S
          },
         explicit-IAB-MT-r16 SEQUENCE {
              nrofDownlinkSymbols-r16 INTEGER
 (1..maxNrofSymbols-1)OPTIONAL, -- Need S
              nrofUplinkSymbols-r16 INTEGER
 (1..maxNrofSymbols-1)OPTIONAL -- Need S
          }
     }
 }
 TDD-UL-DL-SlotIndex ::= INTEGER (O..maxNrofSlots-1)
 -- TAG-TDD-UL-DL-CONFIGDEDICATED-STOP
 -- ASN1STOP
```

| ***TDD-UL-DL-ConfiqDedicated* field descriptions** |
|---|
| ***slotSpecificConfigurations ToAddModList*** |
| The *slotSpecificConfigurationToAddModList* allows overriding UL/DL allocations provided in tdd-UL-DL-configurationCommon, see TS 38.213 [13], clause 11.1. |

| ***TDD-UL-DL-ConfiqDedicated-IAB-MT field descriptions*** |
|---|
| ***slotSpecificConfigurations ToAddModList-IAB-MT*** |
| The *slotSpecificConfigurationToAddModList-IAB-MT* allows overriding UL/DL allocations provided in tdd-UL-DL-configurationCommon with a limitation that effectively only flexible symbols can be overwritten in Rel-16. |

| ***slotSpecificConfigurations ToReleaseList-IAB-MT*** |
|---|
| The *slotSpecificConfigurationsToReleaseList-IAB-MT* allows release of a set of slot configuration previously add with *slotSpecificConfiqurationToAddModList-IAB-MT.* |

| ***TDD-UL-DL-SlotConfig* field descriptions** |
|---|
| ***nrofDownlinkSymbols*** |
| Number of consecutive DL symbols in the beginning of the slot identified by *slotlndex.* If the field is absent the UE assumes that there are no leading DL symbols. (see TS 38.213 [13], clause 11.1). |

| ***nrofUplinkSymbols*** |
|---|
| Number of consecutive UL symbols in the end of the slot identified by *slotIndex.* If the field is absent the UE assumes that there are no trailing UL symbols. (see TS 38.213 [13], clause 11.1). |

| ***slotIndex*** |
|---|
| Identifies a slot within a slot configuration period given in *tdd-UL-DL-configurationCommon,* see TS 38.213 [13], clause 11.1. |

| ***symbols*** |
|---|
| The direction (downlink or uplink) for the symbols in this slot. Value *allDownlink* indicates that all symbols in this slot are used for downlink; value *allUplink* indicates that all symbols in this slot are used for uplink; value *explicit* indicates explicitly how many symbols in the beginning and end of this slot are allocated to downlink and uplink, respectively |

| ***TDD-UL-DL-SlotConfig-IAB-MT* field descriptions** |
|---|
| ***symbols-IAB-MT*** |
| The *symbols-IAB-MT* is used to configure an IAB-MT with the SlotConfig applicable for one serving cell. Value *allDownlink* indicates that all symbols in this slot are used for downlink; value *allUplink* indicates that all symbols in this slot are used for uplink; value *explicit* indicates explicitly how many symbols in the beginning and end of this slot are allocated to downlink and uplink, respectively; value *explicit-IAB-MT* indicates explicitly how many symbols in the beginning and end of this slot are allocated to uplink and downlink, respectively. |

As apparent from the above example cell-specific TDD configuration, a set of slot configuration can be defined, where each slot in the configuration set is assigned an index (*slotIndex*) within the slot configuration period (as defined by the above-mentioned cell-common TDD configuration).

Then, the configuration of such a slot can be all DL (*"allDownlink*")*,* or all UL ("*allUplink*")*,* or mixed ("*explicit*')*.* If the configuration is all DL or all UL, all OFDM symbols within the indexed slot are DL or UL. If the configuration is explicit, there are further parameters to indicate the number of initial downlink symbols in the indexed slot (*"nrofDownlinkSymbols*") and to indicate the number of final uplink symbols in this indexed slot ("*norofUplinkSymbols*")*.* The remaining symbols in the slot (i.e. not defined as uplink or downlink) are considered flexible.

The IE *tdd-UL-DL-ConfigDedicated* is optional, and if the network does not configure this IE, the UE uses *tdd-UL-DL-ConfigCommon* IE alone to derive the slot TDD configuration. When the IE *tdd-UL-DL-ConfigDedicated* is provided, the configuration in *tdd-UL-DLConfigDedicated* IE can override only the flexible slots and symbols as defined by *tdd-UL-DL-ConfigCommon.* Put differently, the UE-dedicated TDD configuration can not change the direction of slots/symbols that are already allocated for downlink or uplink defined by *tdd-UL-DL-ConfigCommon* IE.

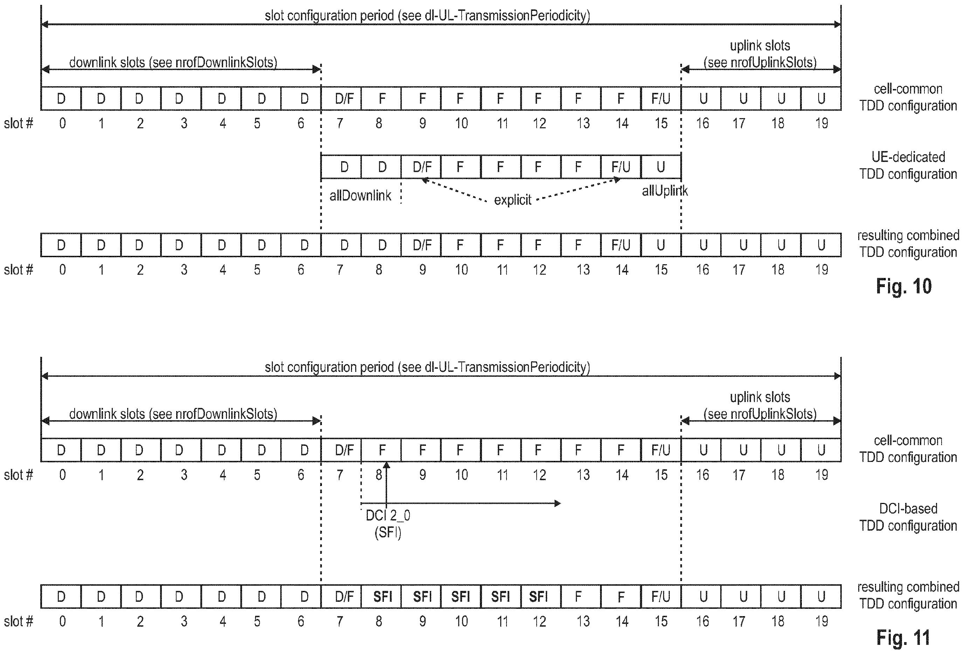

Fig. 10 illustrates how the UE-specific TDD configuration can be used to further define the cell-common TDD configuration. Fig. 10 assumes the same cell-common TDD configuration of Fig. 9 (see above description) and further an exemplary UE-specific configuration regarding the flexible symbols and slots of said cell-common TDD configuration. According to this example of Fig. 10, the UE-dedicated TDD configuration defines slots 7 and 8 of the slot configuration period to be all downlink (e.g. using *slotIndex* and *allDownlink*), defines slot 15 to be all uplink (e.g. using *slotlndex* and *allUplink*). Furthermore, slots 9 and 14 are configured explicitly, with a particular sequence of downlink respectively uplink symbols (not illustrated) (e.g. using *slotlndex, explicit* and *nrofDownlinkSymbols* and *nrofUplinkSymbols*). The remaining symbols in slots 9 and 14 are flexible symbols, and the remaining slots 10, 11 and 12 remain flexible slots (including flexible symbols).

### 3) dynamic TDD configuration

By use of a downlink control information message, particularly of DCI format 2_0, a further and fast mechanisms is supported by which the network can configure the flexible slots defined by the cell-common TDD configuration (see above IE *TDD-UL-DL-ConfigCommon*), for example to adjust same to the traffic requirements of a UE.

Using the DCI format 2_0, a very dynamic TDD configuration can be achieved on short notice. 5G NR provides a plurality of slot formats, each of which defines the transmission direction of the symbols within a single slot.

In such an exemplary 5G NR compliant implementation, the gNB uses a slot format indicator (SFI) to inform the UE about the slot format to be used (see also TS 38.213 v17.2.0 section 11.1.1).

DCI Format 2_0 can carry slot format indicator 1, slot format indicator 2....slot format indicator N (see TS 38.212, section 7.3.1.3.1). For instance, the slot format indicator includes an index value, associated with one slot format among a plurality of slots formats, e.g. in the form of a table, such as the following excerpt of Table 11.1.1-1 "Slot format for normal cyclic prefix" of TS 38.213.

**Table 11.1.1-1: Slot formats for normal cyclic prefix**

| **Format** | **Symbol number in a slot** | | | | | | | | | | | | | |
|---|---|---|---|---|---|---|---|---|---|---|---|---|---|---|
| | **0** | **1** | **2** | **3** | **4** | **5** | **6** | **7** | **8** | **9** | **10** | **11** | **12** | **13** |
| 0 | D | D | D | D | D | D | D | D | D | D | D | D | D | D |
| 1 | U | U | U | U | U | U | U | U | U | U | U | U | U | U |
| 2 | F | F | F | F | F | F | F | F | F | F | F | F | F | F |
| 3 | D | D | D | D | D | D | D | D | D | D | D | D | D | F |
| 4 | D | D | D | D | D | D | D | D | D | D | D | D | F | F |
| 5 | D | D | D | D | D | D | D | D | D | D | D | F | F | F |
| 6 | D | D | D | D | D | D | D | D | D | D | F | F | F | F |
| 7 | D | D | D | D | D | D | D | D | D | F | F | F | F | F |
| 8 | F | F | F | F | F | F | F | F | F | F | F | F | F | U |
| 9 | F | F | F | F | F | F | F | F | F | F | F | F | U | U |
| 10 | F | U | U | U | U | U | U | U | U | U | U | U | U | U |
| 11 | F | F | U | U | U | U | U | U | U | U | U | U | U | U |
| 12 | F | F | F | U | U | U | U | U | U | U | U | U | U | U |
| 13 | F | F | F | F | U | U | U | U | U | U | U | U | U | U |
| 14 | F | F | F | F | F | U | U | U | U | U | U | U | U | U |
| 15 | F | F | F | F | F | F | U | U | U | U | U | U | U | U |
| ... | ... | ... | ... | ... | ... | ... | ... | ... | ... | ... | ... | ... | ... | ... |

The SFI-index field value of a DCI format 2_0 indicates to a UE a slot format for each slot in a number of slots (e.g. for each DL BWP or each UL BWP), starting from a slot where the UE detects the DCI format 2_0. The number of slots is equal to or larger than a PDCCH monitoring periodicity for the DCI format 2_0. As a result, in those slots for which the TDD configuration defined by the SFI of the DCI 2_0 applies, the UE follows the TDD configuration as defined by the SFI and the above table.

There can be up to N SFIs, wherein each SFI is provided in order to facilitate configuring different SFI to different UEs (or groups of UEs). A UE is then additionally provided with a location within the DCI ("*positionInDCI*")*,* to be directed to one SFI. In this sense, DCI format 2_0 is a group common DCI.

**Fig. 11** illustrates how the dynamic TDD configuration of the DCI 2_0 can be used to further define the cell-common TDD configuration. Fig. 11 assumes the same cell-common TDD configuration of Fig. 9 (see above description) and further exemplarily assumes that the base station transmits the DCI 2_0 in slot 8, which is a flexible slot of the cell-common TDD configuration. It is further exemplarily assumed that the DCI 2_0 TDD configuration definition is valid for 5 slots, i.e. up to including slot 12. The result is that the TDD configuration of the SFI overrides in slots 8 to 12 the flexible definition initially defined by the cell-common TDD configuration; in Fig. 11 this is illustrated by denoting the slot as "*SFI*".

Even though it is not illustrated, it should be noted that as a further option, the dynamic TDD configuration based on DCI 2_0 can also be used by the base station to further define the combined TDD configuration resulting from the cell-common and UE-specific TDD configurations (see bottom of Fig. 10).

### Subband Non-Overlapping Full Duplex

Allocation of a limited time duration for the uplink in TDD results in reduced coverage, increased latency and reduced capacity. As a possible enhancement on this limitation of the conventional TDD operation, 3GPP has launched a study item "Study on evolution of NR duplex operation" to study the feasibility of allowing the simultaneous existence of downlink and uplink, a.k.a. full duplex, or more specifically, subband non-overlapping full duplex (SBFD) at the gNB side within a conventional TDD band. Providing full duplex operation within a TDD band may enable more UL time duration to enhance UL coverage, may reduce latency and may allow to increase UL capacity, If possible, there should be no or minimal impact to legacy UEs that will not support SBFD.

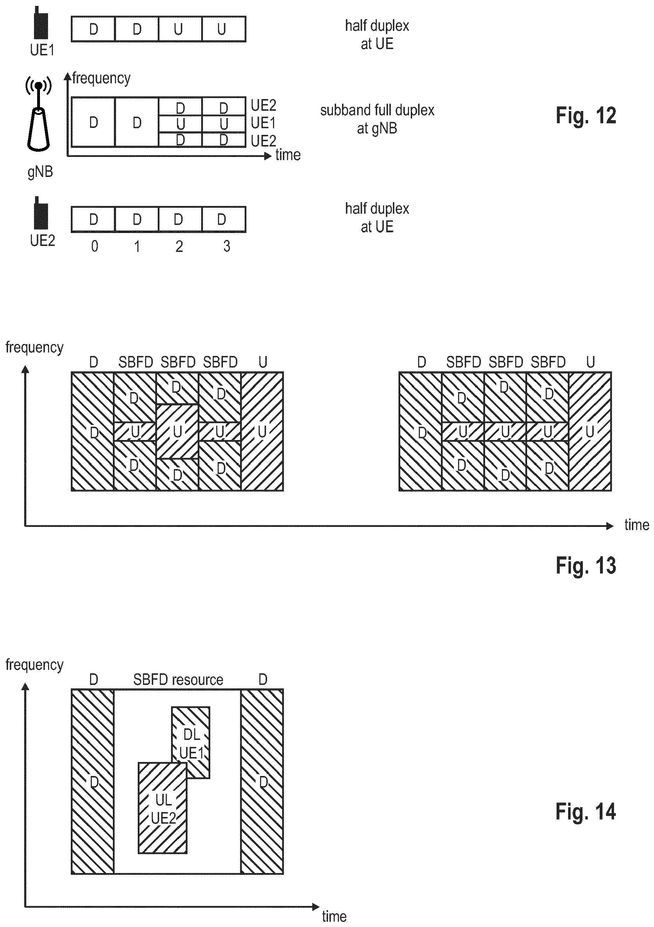

3GPP may possibly take a phased approach in Release 18, requiring only the gNB side to operate in full-duplex, while the UE(s) may still operate in half-duplex. The gNB is transmitting and receiving at the same time using resources in a same frequency band. However, at a given time, each UE is only either transmitting or receiving in the resources of said frequency band. The SBFD operation is exemplarily illustrated in **Fig. 12****,** assuming full duplex at the gNB side and half duplex at the UE side. It is however also possible that the UE(s) operate in full-duplex to implement the SBFD. Correspondingly, in the time periods 2 and 3 (e.g. OFDM symbols 2 and 3, or slots 2 and 3), UE1 and UE2 have respectively different TDD directions. The solutions for improved TDD communication procedures presented further below are applicable to UEs that support half-duplex operation as well as to UEs that support full-duplex operation.

SBFD is supposed to facilitate a more flexible TDD direction (UL and DL) in certain time/frequency resources, e.g. a subband in the frequency domain and a time period (such as a one or more symbols, one or more slots) in the time domain. As a further option, the frequency band for SBFD operation may stay the same over the time period (or part of it) or may change. In other words, the SBFD may operate based on same or different frequency resources across different SBFD time period (e.g. SBFD symbols). **Fig. 13** illustrates variable (left side) and same frequency resources (right side) in different SBFD time periods (e.g. SBFD symbols).

For instance, a subband is used to allow flexible and possibly different communication directions (UL/DL) for several UEs. As one example, with SBFD, non-overlapping downlink sub-bands coexist during uplink slots and uplink sub-bands coexist during corresponding downlink slots. This reduces the TDD buffering delay due to the exclusive TDD transmission opportunity at a time.

From UE perspective, the communication direction in the subband can be different from the legacy communication direction (defined e.g. by one or more of the common or dedicated TDD configuration and the SFI, see above). How to define the TDD direction in the SBFD resource is still under discussion. However, it is possible that it will conflict with the legacy TDD direction.

Conceptually, the SFBD mode differs from a FDD mode in the frequency separation between the UL band and the DL band being significantly smaller or narrower than in the FDD mode. Optionally, the SFBD mode may operate over a single unpaired spectrum band, while the FDD mode operates over a paired spectrum including a UL spectrum band and a DL spectrum band.

For subband non-overlapping full duplex (SBFD) operation at the gNB, the gNB may have to configure different transmission directions to different UEs on the same one or more symbols or slots. As discussed above, current 3GPP specifications (e.g. Rel. 15/16/17), such a different configuration can be achieved by a UE-dedicated RRC TDD configuration or a DCI 2_0 - based TDD configuration.

The SBFD operation is currently still in development at 3GPP. Only few aspects of SBFD have been agreed so far.

One open issue relates to whether (and if so how) the UE is informed about the time and/or frequency locations of the frequency (sub)band for the SBFD operation. The following alternatives were discussed at 3GPP:
- SBFD operation Alt 1:
   - Time and frequency locations of subbands for SBFD operation are not known to UEs.
   - UE behaviors follow existing specifications without introducing new UE behaviors for SBFD operation at gNB side.
- SBFD operation Alt 2:
   - Time and frequency locations of subbands for SBFD operation are not known to UEs.
   - UE behaviors for non-SBFD aware UEs follow existing specifications.
   - From RAN1 perspective, new UE behaviors can be introduced for SBFD aware UEs
- SBFD operation Alt 3:
   - Only time location of subbands for SBFD operation is known to SBFD aware UEs.
   - UE behaviors for non-SBFD aware UEs follow existing specifications.
   - From RAN1 perspective, new UE behaviors can be introduced for SBFD aware UEs based on the time location of subbands for SBFD operation
- SBFD operation Alt 4:
   - Both time and frequency locations of subbands for SBFD operation are known to SBFD aware UEs.
   - UE behaviors for non-SBFD aware UEs follow existing specifications.
   - From RAN1 perspective, new UE behaviors can be introduced for SBFD aware UEs based on the time and frequency locations of subbands for SBFD operation.

The solutions for improved TDD communication procedures presented further below are primarily applicable to Alternative 4 (and will thus be primarily described on said basis only for illustrative reason), because the improved UE is aware of both the time and frequency locations of subbands for the SBFD operation. However, the solutions for improved TDD communication procedures presented further below can also be applicable to alternative 3, according to which the UE is aware of only the time location of subbands for the SBFD operation.

If the location of the subbands for the SBFD operation (frequency and/or time) is to be provided to the UE, a semi-static (e.g. based on SIB or RRC) or dynamic configuration (e.g. based on DCI) is possible.

If the UE is aware of the SBFD resource, this may be beneficial for the UE-to-UE co-channel CLI (cross-link-interference) measurement reporting, which can be made specific for SBFD, e.g. including one or more of :
- Measurement resource/reporting configuration
- Measurement/reporting details (including UE processing delay)
- Relevant information exchange (between gNBs) if needed
- Usage of measurement at gNB.

Furthermore, if the UE is aware of the SBFD resource, at least the following options are possible for a UE configured with an UL subband in an SBFD symbol:
- Option 1: The SBFD aware UE does not expect to be scheduled with UL transmission outside the UL subband or to be scheduled with DL reception within the UL subband in the SBFD symbol
- Option 2: The SBFD aware UE does not expect to be scheduled with UL transmission outside the UL subband and may be scheduled with DL reception within the UL subband in the SBFD symbol
- Option 3: The SBFD aware UE does not expect to be scheduled with DL reception within the UL subband and may be scheduled with UL transmission outside the UL subband in the SBFD symbol
- Option 4: The SBFD aware UE may be scheduled with UL transmission outside the UL subband or DL reception within the UL subband in the SBFD symbol

For instance, for options 2 and 4, the UE can be scheduled with either UL or DL in the SBFD UL subband, thereby supporting more flexible scheduling. On the other hand, options 1 and 3 allow scheduling in one direction.

### Further Improvements

In the above, enhancements for the full-duplex operation of TDD have been discussed, particularly the SBFD operation to be introduced by 3GPP Release 18. The SBFD operation is currently still in development at 3GPP, and only few aspects of SBFD have been agreed so far.

The inventors have thus identified the necessity to define the SBFD operation in more detail.

Moreover, as the TDD direction in SBFD (followed by a new SBFD-supporting UE of Rel. 18) can be different from the legacy TDD direction (followed by a legacy UE of Rel. 15/16/17), the coexistence between Rel. 18 UEs using SBFD and legacy UEs following the legacy TDD rules is an important issue that needs to be addressed.

A legacy UE may receive numerous different communications, such as one or more of SSB (Synchronization Signal Block), SIBx (System Information Blocks), CSI-RS (Channel State Information Reference Signals), SPS PDSCH (Semi-Persistent Scheduling PDSCH), and DL paging. A legacy UE may transmit numerous different communications, such as one or more of SRS (Sounding Reference Signal), PRACH (Physical Random Access Channel), MsgA (of the random access procedure), CSI report and the scheduling request on PUCCH, a configured-grant based PUSCH transmission in the UL.

Some or all of these downlink and uplink signal are configured semi-statically (e.g. by SIB and/or RRC) and cannot be adapted dynamically on short notice by the scheduling device (gNB). Therefore, it is difficult for the gNB to coordinate all the UL/DL communications from various UEs to avoid conflicts.

In particular, cross-link interference (CLI), direct or in-band-emission, may happen and impact the semi-static UL/DL transmissions of legacy UEs (see e.g. above signal)s. This may for instance occur when
- SBFD is configured in some OFDM symbols / PRBs for Rel. 18, and
- The TDD direction of the actual scheduling in the SBFD resource used by the Rel. 18 UE(s) overrides the TDD direction defined by the legacy rule, which is used by legacy UEs.

As illustrated in **Fig. 14****,** if a Rel. 18 UE 2 is configured with an SBFD resource and indicated to transmit in the SBD resource to use as UL resource, it is possible that the DL transmission by a legacy UE 1 can be impacted due to CSI caused by either a direct resource-overlapping or by in-band emission.

Although in the exemplary scenario of Fig. 14 the two conflicting resources are directly overlapping, a problem also exists in that CLI is caused by resources that are not overlapping but are close to each other in time and frequency (also e.g. assuming that the two UEs are closely located in the cell).

It can further be exemplarily assumed that the DL transmission by UE1 is either dynamically scheduled (e.g. by DL DCI) or semi-persistently scheduled (SPS configuration). In case of a dynamically scheduled DL transmission for UE1, the gNB could attempt to avoid such an overlap of the resources by either adapting the scheduled DL resources or even cancel the DL grant. However, in case of SPS, such a fast adaptation of the SPS DL transmission is not possible, such that the conflict problem is more severe.

The inventors have thus identified the possibility of providing improved TDD communication procedures, for allowing to avoid one or more of the above described disadvantages. The present invention relates to different solutions and variants for such improved TDD communication mobility procedures.

For example, it may become possible to re-configure in a flexible and fast manner a TDD configuration to be followed by a UE and gNB, particularly in the context of SBFD operation.

### Embodiments

In the following, UEs, base stations, and respective procedures to meet these needs will be described for the new radio access technology envisioned for the 5G mobile communication systems, but which may also be used in previous LTE-based mobile communication systems or future (e.g. 6G) mobile communication systems. Different implementations and variants will be explained as well. The following disclosure was facilitated by the discussions and findings as described above and may for example be based at least on part thereof.

In general, it should be noted that many assumptions have been and are made herein so as to be able to explain the principles underlying the present disclosure in a clear, concise and understandable manner. These assumptions are however to be understood merely as examples made herein for illustration purposes, which are not necessarily essential for the invention and should thus not limit the scope of the disclosure. A skilled person will be aware that the principles of the following disclosure and as laid out in the claims can be applied to different scenarios and in ways that are not explicitly described herein.

Moreover, some of the terms of the procedures, entities, layers etc. used in the following are closely related to LTE/LTE-A systems or to terminology used in the current 3GPP 5G standardization, even though specific terminology to be used in the context of the new radio access technology for the next communication systems is not fully decided yet or might finally change. Thus, terms could be changed in the future, without affecting the functioning of the respective features and solutions. Consequently, a skilled person is aware that the solutions and their scope of protection should not be restricted to particular terms exemplarily used herein for lack of newer or finally agreed terminology, but should be more broadly understood in terms of functions and concepts that underlie the solutions explained in the present disclosure.

For instance, a **mobile station** or **mobile node** or **user terminal** or **user equipment (UE)** is a physical entity (physical node) within a communication network. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

The term **"base station"** or **"radio base station"** here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB. Moreover, the base station may also be gNB in a Non-Terrestrial Network (NTN) NR system.

Communication between the UE and the base station is typically standardized and may be defined by different layers, such as PHY, MAC, RRC etc. (see above background discussion).

The expression "time-division configuration" here can be understood as a configuration of the communication direction in a time-division-based communication scheme, for each of one or more time intervals of said time-division configuration. The **"communication direction"** can be configured by the time-division configuration to be one of an uplink direction, or a downlink direction, or a flexible direction.

The flexible direction in turn can then be either the uplink direction or the downlink direction. In one example implementation the "time-division configuration" can be a **"cell-common"** configuration or a **"UE-specific"** configuration, e.g. respectively the cell-common TDD configuration and UE-dedicated TDD configuration defined by 5G (see above). Optionally, the UE specific time-division configuration can be a **"DCI-based"** configuration, e.g. in the dedicated to a UE or group of UEs, e.g. time-division configuration provided by DCI format 2_0 as defined by 5G (see above). "Cell-common" in this context can e.g. be understood as meaning that the time-domain configuration is common in the cell of the gNB, e.g. common to all UEs located in the cell. "UE-specific" in this context can e.g. be understood as meaning that the time-domain configuration is specific to one or a group of UEs (can also be termed "dedicated" to one UE). "DCI-based" in this context can e.g. be understood as meaning that the time-domain configuration is provided to the UE based on a DCI message, e.g. rather dynamically in time when compared to the typical communication mechanisms for "cell-common" time-division configurations (such as RRC or SIB).

The expression **"full duplex resource"** here can be understand as a resource (e.g. time-frequency resource) in which a gNB, serving several UEs, can operate in full-duplex, transmitting and receiving signals via the same frequency at the same time. One example implementation is the subband non-overlapping full-duplex (SBFD) operation discussed and introduced by 5G (see above). The "full-duplex resource" can be understood to span one or more time periods, such as one or more symbols, or slots, or subframes, or frames. Furthermore, the "full-duplex resource" can be understood to span one or more frequency regions, such as one or more subbands, bands, bandwidth parts, or any other suitable frequency unit. For instance, the "full duplex resource" can span less than a whole frequency range in which the UE operates or can span the whole frequency range in which the UE operates.

The expression **"to be used instead of"** is to be understood in the context of indicating which time-division configurations are to be used. Alternative wording could be that it is indicated to switch from one previously used time-division configuration to another indicated time-division configuration. Still alternative wording could be that it is indicated to flip from one previously used time-division configuration to another indicated time-division configuration. Still alternative wording could be to stop using the previously used time-division configuration and to start using another indicated time-division configuration.

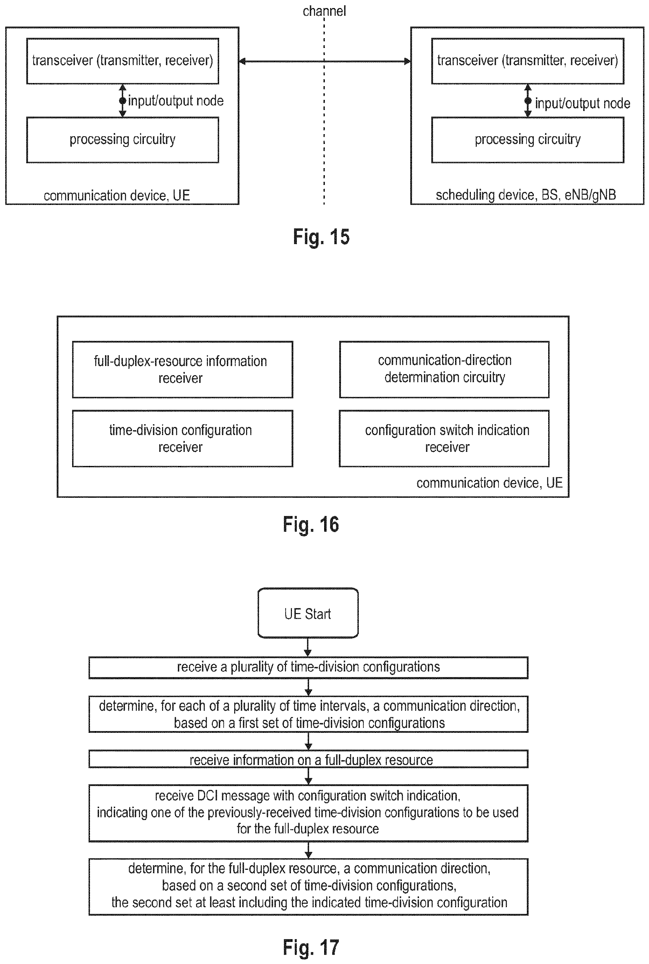

**Fig. 15** illustrates a general, simplified and exemplary block diagram of a user equipment (also termed communication device) and a scheduling device (here exemplarily assumed to be located in the base station, e.g., the LTE eNB (alternatively termed ng-eNB) or the gNB in 5G NR). The UE and eNB/gNB are communicating with each other over a (wireless) physical channel respectively using the transceiver.

The communication device may comprise a transceiver and processing circuitry. The transceiver in turn may comprise and/or function as a receiver and a transmitter. The processing circuitry may be one or more pieces of hardware such as one or more processors or any LSIs. Between the transceiver and the processing circuitry there is an input/output point (or node) over which the processing circuitry, when in operation, can control the transceiver, i.e., control the receiver and/or the transmitter and exchange reception/transmission data. The transceiver, as the transmitter and receiver, may include the RF (radio frequency) front including one or more antennas, amplifiers, RF modulators/demodulators and the like. The processing circuitry may implement control tasks such as controlling the transceiver to transmit user data and control data provided by the processing circuitry and/or receive user data and control data, which is further processed by the processing circuitry. The processing circuitry may also be responsible for performing other processes such as determining, deciding, calculating, measuring, etc. The transmitter may be responsible for performing the process of transmitting and other processes related thereto. The receiver may be responsible for performing the process of receiving and other processes related thereto, such as monitoring a channel.

Different solutions of improved time-division communication procedures will be described in the following. In said connection, improved UEs, improved base stations and improved integrated circuits are presented, which participate separately or together in the improved time-division communication procedures. Corresponding methods for the UE behavior and the base station behavior are provided as well. The integrated circuits may correspond to the UE and base station, and respectively their behavior.

The present solutions of the improved time-division communication procedures can be based on some or a combination of the different mechanisms described above in context of the exemplary 3GPP 5G-NR implementations, including e.g. the use of the signaling mechanisms (e.g. particular the information elements for the common, UE-dedicated and dynamic signaling) or the use of definition rules for determining a particular transmission direction for a slot or symbol based on the received configuration information.

**Fig. 16** illustrates a simplified and exemplary UE structure according to an exemplary implementation of the improved time-division communication procedure solution, which can be implemented based on the general UE structure explained in connection with Fig. 15. The various structural elements of the UE illustrated in said Fig. 16 can be interconnected between one another e.g., with corresponding input/output nodes (not shown) e.g., in order to exchange control and user data and other signals. Although not shown for illustration purposes, the UE may include further structural elements.

As apparent from Fig. 16, the UE may include a time-division configuration receiver, a communication-direction determination circuitry, a full-duplex-resource information receiver, and a configuration switch indication receiver.

In the present case, the receiver of the UE can thus be exemplarily configured to at least partly perform one or more of receiving a plurality of time-division configurations, receiving information on a full-duplex resource, receiving a downlink control information message including a configuration switch indication, etc.

In the present case as will become apparent from the below disclosure, the processing circuitry of the UE can thus be exemplarily configured to at least partly perform one or more of determining a communication direction based on different sets of one or more time-division configurations, etc.

In the present case as will become apparent from the below disclosure, the transmitter of the UE can thus be exemplarily configured to at least partly perform communication with a base station.

One exemplary procedure as will be disclosed in more detail further below is implemented by a UE that includes the following. A receiver of the UE receives a plurality of time-division configurations. A circuitry of the UE determines, for each of a plurality of time intervals, a communication direction, based on a first set of one or more time-division configurations among the previously-received plurality of time-division configurations. The receiver receives information on a full-duplex resource. The receiver receives a downlink control information, DCI, message, including a configuration switch indication. The configuration switch indication indicates one of the previously-received plurality of time-division configurations to be used. The circuitry determines, for each of one or more full-duplex time intervals of the full-duplex resource and respectively for a complete full-duplex frequency region of the full-duplex resource, a communication direction, based on a second set of one or more time-division configurations among the previously-received plurality of time-division configurations. The second set of time-division configurations at least includes the indicated time-division configuration.

According to one optional and exemplary implementation of the above UE, the indicated time-division configuration is to be used instead of a previously-used time-division configuration of the first set of time-division configurations, and wherein the second set of time-division configurations at least includes the indicated time-division configuration instead of the previously-used time-division configuration of the first set of time-division configurations.

A corresponding exemplary method comprises the following steps performed by a UE:
receiving a plurality of time-division configurations,
determining, for each of a plurality of time intervals, a communication direction, based on a first set of one or more time-division configurations among the previously-received plurality of time-division configurations,
receiving information on a full-duplex resource,
receiving a downlink control information, DCI, message, including a configuration switch indication, wherein the configuration switch indication indicates one of the previously-received plurality of time-division configurations to be used, and
determining, for each of one or more full-duplex time intervals of the full-duplex resource and respectively for a complete full-duplex frequency region of the full-duplex resource, a communication direction, based on a second set of one or more time-division configurations among the previously-received plurality of time-division configurations,
wherein the second set of time-division configurations at least includes the indicated time-division configuration.

A corresponding sequence diagram for an exemplary UE behaviour in line with the above-discussed UE and UE method is illustrated in **Fig. 17****.**

The above-described improved TDD communication procedure thus achieves the object and overcomes some of the drawbacks explained above. For instance, the improved TDD communication procedure facilitates to easily and flexibly and dynamically configure the communication direction(s) for a full-duplex resource (e.g. the SBFD resource mentioned above). The gNB can thus control the communication directions for the full-duplex resource separately from the non-full-duplex resources. This facilitates that the communication directions can be changed so as to avoid collisions within the SBFD resource, as explained above in connection with Fig 14. The above mechanism of the improved TDD communication procedure can be used to control different UEs that support this mechanism.

It is thus facilitated to avoid or reduce intra-cell interference between legacy UEs and new-release UEs that support the improved TDD communication procedure, by dynamically controlling the TDD communication direction which the new-release UEs follows within the SBFD resource. According to one option, the TDD communication directions within the SBFD resource could be changed from U to D, or from D to U, as needed to be in consistency with the colliding legacy UE.

Furthermore, the improved TDD communication procedure is also beneficial to avoid or reduce inter-cell interference. In particular, the gNB may control the TDD communication directions of a new-release UE within the SBFD resource so as to be aligned with TDD communication directions used in neighbor cells.

Some exemplary implementations of the improved TDD communication procedure also involve improved base stations. Correspondingly, the improved TDD communication procedure also provides improved base stations that participate therein, as will be explained in the following.

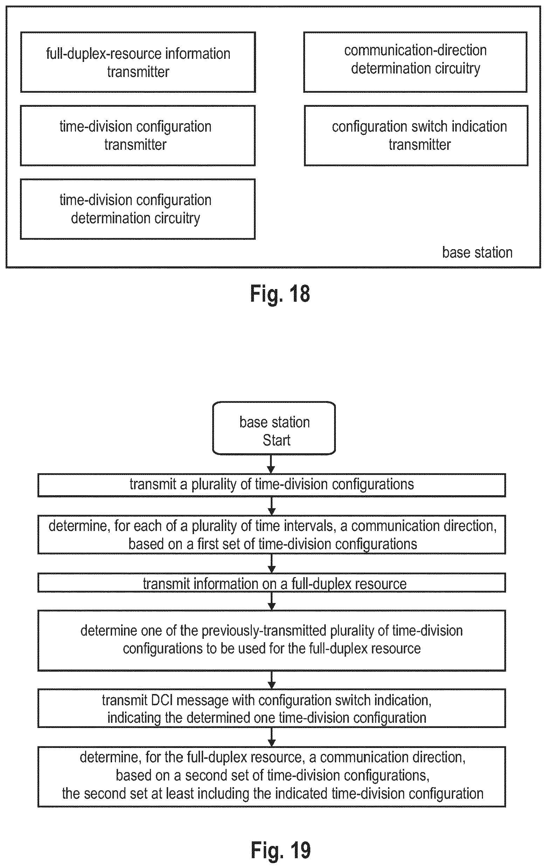

**Fig. 18** illustrates a simplified and exemplary base station structure according to an exemplary implementation of the improved TDD communication procedure, which can be implemented based on the general base station structure explained in connection with Fig. 15. The various structural elements of the base station illustrated in said Fig. 18 can be interconnected between one another e.g., with corresponding input/output nodes (not shown) e.g., in order to exchange control and user data and other signals. Although not shown for illustration purposes, the base station may include further structural elements.

As apparent therefrom, the base station comprises a time-division configuration transmitter, a time-division configuration determination circuitry, a communication direction determination circuitry, a full-duplex-resource information transmitter, and a configuration-switch indication transmitter.

In the present case as will become apparent from the below disclosure, the receiver of the base station can thus be exemplarily configured to at least partly perform receiving communication from a UE, etc.

In the present case as will become apparent from the below disclosure, the processing circuitry of the base station can thus be exemplarily configured to at least partly perform one or more of determining a communication direction based on different sets of one or more time-division configurations, determining one time-division configuration for the full-duplex resource, etc.

In the present case as will become apparent from the below disclosure, the transmitter of the base station can thus be exemplarily configured to at least partly perform one or more of transmitting a plurality of time-division configurations, transmitting information on a full-duplex resource, transmitting a downlink control information message including a configuration switch indication, etc.

One exemplary procedure as will be disclosed in more detail further below is implemented by a base station that includes the following. A transmitter of the base station transmits a plurality of time-division configurations. Circuitry of the base station determines, for each of a plurality of time intervals, a communication direction, based on a first set of one or more time-division configurations among the previously-transmitted plurality of time-division configurations. The transmitter transmits information on a full-duplex resource. The circuitry determines one of the previously-transmitted plurality of time-division configurations to be used for the full-duplex resource. The transmitter transmits a downlink control information, DCI, message, including a configuration switch indication, wherein the configuration switch indication indicates the determined one time-division configuration. The circuitry determines, for each of one or more full-duplex time intervals of the full-duplex resource and respectively for a complete full-duplex frequency region of the full-duplex resource, a communication direction, based on a second set of one or more time-division configurations among the previously-transmitted plurality of time-division configurations. The second set of time-division configurations at least includes the indicated time-division configuration.

A corresponding method comprises the following steps performed by the base station:
transmitting a plurality of time-division configurations,
determining, for each of a plurality of time intervals, a communication direction, based on a first set of one or more time-division configurations among the previously-transmitted plurality of time-division configurations,
transmitting information on a full-duplex resource,
determining one of the previously-transmitted plurality of time-division configurations to be used for the full-duplex resource,
transmitting a downlink control information, DCI, message, including a configuration switch indication, wherein the configuration switch indication indicates the determined one time-division configuration, and
determining, for each of one or more full-duplex time intervals of the full-duplex resource and respectively for a complete full-duplex frequency region of the full-duplex resource, a communication direction, based on a second set of one or more time-division configurations among the previously-transmitted plurality of time-division configurations, wherein the second set of time-division configurations at least includes the indicated time-division configuration.

A corresponding sequence diagram for an exemplary base station behavior in line with the above-discussed base station and corresponding method is illustrated in **Fig. 19****.** The sequence diagram illustrates an exemplary and simplified implementation of the above presented base station method.

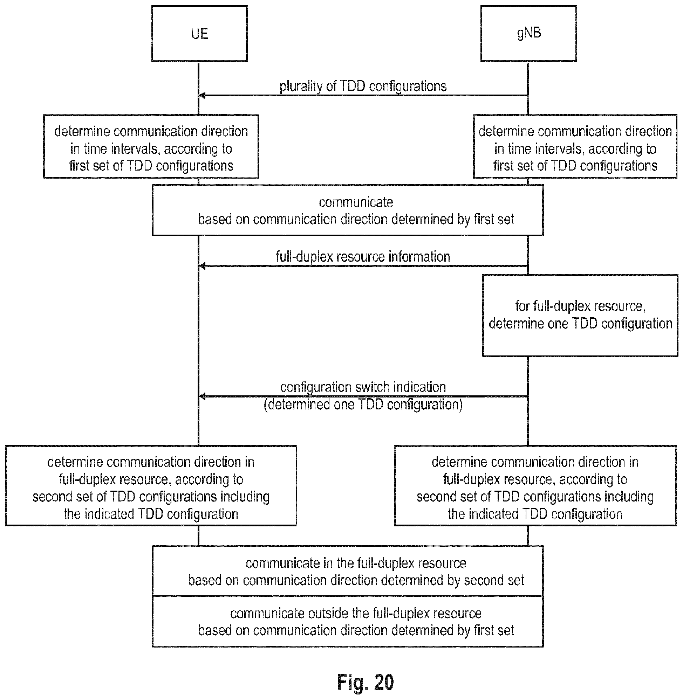

**Fig. 20** is a signaling diagram of an exemplary and simplified implementation of the improved TDD communication procedure, illustrating the exchange of messages between the different participating entities (here the UE and gNB) and the steps performed at these entities.

The UE behaviour and gNB behaviour follow the above described UE and base station and the respective methods.

Fig. 20 is additionally illustrating the resulting communication between the UE and gNB, based on the determined communication directions. As apparent, the UE and gNB perform corresponding operations so as to allow a synchronized communication based on the same understanding of the communication directions that are given by the configured TDD configuration(s). The improved TDD communication procedure facilitates a communication within the full-duplex resource that can be different compared to non-full-duplex resources, by providing different TDD configuration(s) for determining the communication directions for the full-duplex resource. The configuration switch indication can be transmitted from the gNB to the UE so as to indicate a different TDD configuration. To illustrate said difference, Fig. 20 illustrates the resulting communication to be based on the first set of TDD configurations, before and/or outside the SBFD resource, while the resulting communication within the SBFD resource is based on the second set of TDD configurations (possibly different from the first set).

The above explained improved TDD communication procedures can be applied to different exemplary scenarios, as will be explained in the following in detail.

According to a first scenario, the UE is configured with a cell-common TDD configuration as well as with a UE-specific TDD configuration. The above-denoted first set of TDD configurations may include one or both of the cell-common time-division configuration and the UE-specific time-division configuration. Correspondingly, the configuration switch indication of the DCI message indicates one of the cell-common time-division configuration and the UE-specific time-division configuration, which is then included in the above-denoted second set of TDD configurations. As a result, the TDD communication direction(s) within the SBFD resource follows the indicated TDD configuration and thus can be different from the TDD communication direction(s) outside the SBFD resource.

In one example of this first scenario, the UE is configured with both the cell-common and UE-dedicated TDD configurations, and thus primarily operates according to a combination of both the cell-common TDD configuration and the UE specific TDD configuration, e.g. as explained in detail above (see e.g. Fig. 10). In this example, the above-denoted first set of TDD configurations may include the cell-common TDD configuration and the UE-specific TDD configuration. Furthermore, for the TDD communication operation for the SBFD resource, the configuration switch indication of the DCI message may indicate the cell-common TDD configuration, such that the above-denoted second set of TDD configurations comprises only the indicated cell-common TDD configuration. As a result, the TDD communication direction(s) within the SBFD resource follows the indicated cell-common TDD configuration only, e.g. ignoring the UE-dedicated TDD configuration.

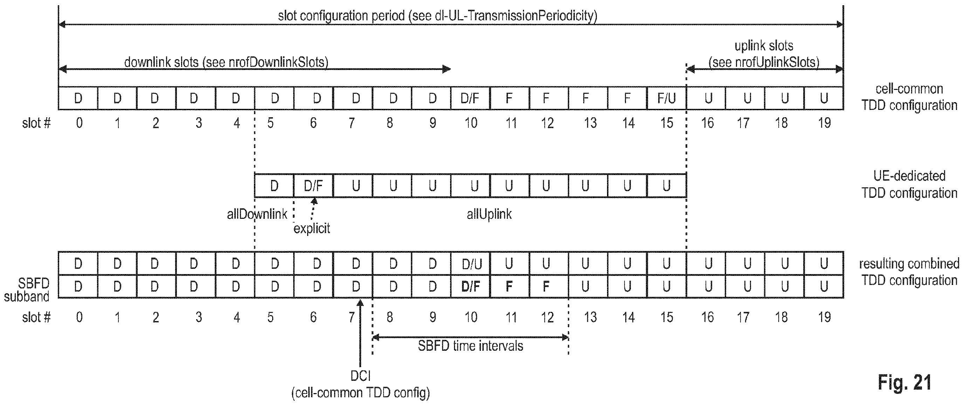

One exemplary implementation of this example for the first scenario is illustrated in **Fig. 21****.** In said Fig. 21, the first scenario is illustrated from the perspective of one UE being in communication with a gNB. The UE supports the SBFD mechanism and is thus aware of the SBFD resource. An exemplary cell-common TDD configuration is illustrated at the top row, an exemplary UE-dedicated TDD configuration is illustrated in the middle row, and the resulting combined TDD configuration is illustrated in the bottom row as will be explained in more detail below.

In this exemplary implementation, it is assumed that the TDD configurations can be defined based on the parameters as introduced for the exemplary 5G compliant implementations of TDD configurations discussed above (see e.g. Fig. 9, 10 and 11), thus using RRC parameters such as *dl-UL-TransmissionPeriodicity, nrofDownlinkSlots, nnrofUplinkSlots, allDownlink, allUplink.* The illustrated communication directions (D, F, U) for the cell-common and UE-dedicated TDD configurations are to be considered purely exemplary and illustrative, and can be different to the ones illustrated.

Furthermore, the bottom row is divided into two sub-rows, wherein the bottom sub-row represents the SBFD subband (as an example of the full-duplex frequency region), wherein the upper sub-row represents the remaining frequency region to be operated by the UE. In the time domain, the SBFD resource is exemplary assumed to span the time slots 8 - 12.

In this exemplary implementation, it is further assumed that the gNB transmits the DCI with the configuration switch indication in a timely manner before the SBFD resource (here in time slot 7), indicating the cell-common TDD configuration.

As apparent from the bottom rows, the TDD communication directions within the SBFD resource follow the indicated cell-common TDD configuration and thus are partly different from the TDD communication direction(s) outside the SBFD resource. In particular, in the non-SBFD frequency region in time slots 8 to 12, the UE determines a communication direction based on a combination of the cell-common and the UE-dedicated TDD configurations. In this connection, this exemplary scenario assumes that communication directions D and U of the cell-common TDD configuration cannot be overwritten by the UE-dedicated TDD configuration; only the flexible direction of the cell-common TDD configuration can be re-defined by the UE-dedicated TDD configuration.

The resulting TDD communication directions in the non-SBFD frequency region in time slots 8 to 12 are thus D, D, D/U, U and U respectively.

On the other hand, in the SBFD frequency region in time slots 8 to 12, the UE determines a communication direction based on only the indicated cell-common TDD configuration, thereby resulting in the communication directions D, D, D/F, F, F (basically corresponding to the cell-common TDD configuration).

Comparing the TDD communication directions during the SBFD time intervals for the SBFD subband and the remaining frequency region, it is apparent that for time slots 10, 11 and 12, the respective communication directions are different.

It is assumed that a collision between the UE of Fig. 21 with another UE (not illustrated) occurs in time slots 10, 11 and 12. The UE of Fig. 21 communicates primarily in the uplink in time slots 10-12, while the other UE might communicate in the downlink. By changing the communication direction within the SBFD resource in those time slots 10, 11 and 12, a direct collision of communication directions between the different UEs can be avoided.According to a second scenario, the UE is configured with a plurality of different cell-common TDD configurations. The above-denoted first set of TDD configurations may include one of the plurality of cell-common time-division configurations. Correspondingly, the configuration switch indication of the DCI message can indicate one of the plurality of cell-common time-division configurations different from the already-used one, which then corresponds to the above-denoted second set of TDD configurations. As a result, the TDD communication direction(s) within the SBFD resource follows the indicated cell-common TDD configuration and thus can be different from the TDD communication direction(s) outside the SBFD resource that follow the original cell-common TDD configuration.

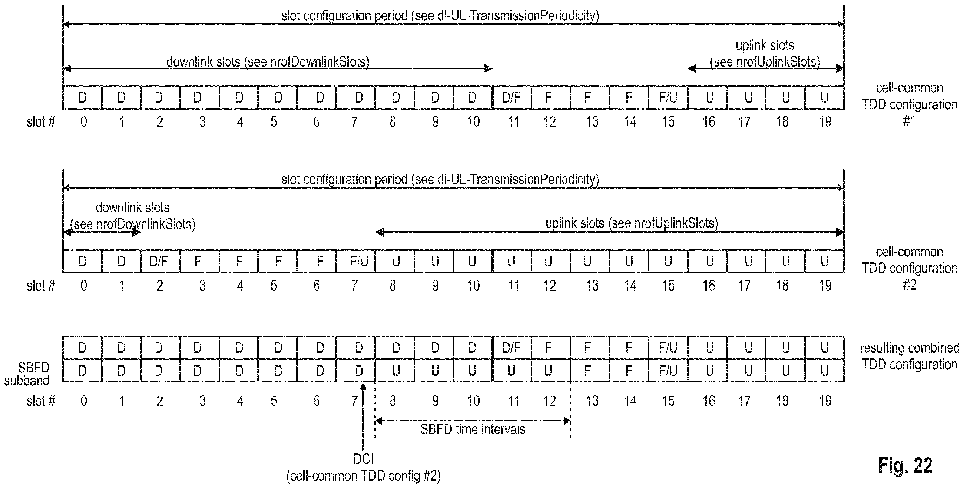

One exemplary implementation of the second scenario is illustrated in **Fig. 22****.** The second scenario has similar assumptions as the first scenario for Fig. 21. Further, the UE is configured with two cell-common TDD configurations #1 and #2, respectively defining different TDD communication directions in some of the time slots, particularly in time slots 2-15. It is assumed that the UE primarily operates according to one cell-common TDD configuration alone, here cell-common TDD configuration #1, e.g. as explained in detail above (see e.g. Fig. 9). Again, the gNB transmits the DCI and the configuration switch indication in a timely manner, in this example indicating the cell-common TDD configuration #2.

As apparent from the bottom rows of Fig. 22, the TDD communication directions within the SBFD resource follow the indicated cell-common TDD configuration #2 and are thus partly different from the TDD communication directions outside the SBFD resource which follow the cell-common TDD configuration #1.

In detail, the resulting TDD communication directions in the non-SBFD frequency region in time slots 8 to 12 is D, D, D, D/F, and F, corresponding to cell-common TDD configuration #1. On the other hand, in the SBFD frequency region in time slots 8 to 12, the UE determines a communication direction based on the indicated cell-common TDD configuration #2, thereby resulting in the communication directions U, U, U, U, and U.

Comparing the TDD communication directions during the SBFD time intervals for the SBFD subband and for the remaining frequency region, it is apparent that the TDD communication directions for all the time slots 8 to 12 directions are different, including even opposite directions (D vs U) in slots 8, 9, 10 and partly in slot 11 too.

If a potential collision of the UE of Fig. 22 with another UE (not illustrated) may occur in any these time slots 8-12, such a collision may be avoided by the changed communication directions of the SBFD resource.

Also, the gNB may be allowed to multiplex UE scheduling for Rel. 18 UEs that support cross-division-duplex (XDD) in the frequency domain (e.g. different frequency subbands), thereby allowing to introduce less impact to legacy UEs. The cell-common configuration can be more efficient.

According to a variant of the second scenario, the UE is not only configured with the two different cell-common TDD configurations, but in addition also with a UE-dedicated TDD configuration. This UE-dedicated TDD configuration is thus to be also considered for the determination of the TDD communication directions (see e.g. Fig. 10). Correspondingly, the above denoted first set of TDD configurations to be used outside the SBFD resource includes this UE-dedicated TDD configuration in addition to one of the cell-common TDD configurations, and also the above denoted second set of TDD configurations to be used within the SBFD resource includes this UE-dedicated TDD configuration in addition to another one of the cell-common TDD configurations. Therefore, the two sets are based on the same UE-dedicated TDD configuration but differ from one another in the used cell-common TDD configuration.

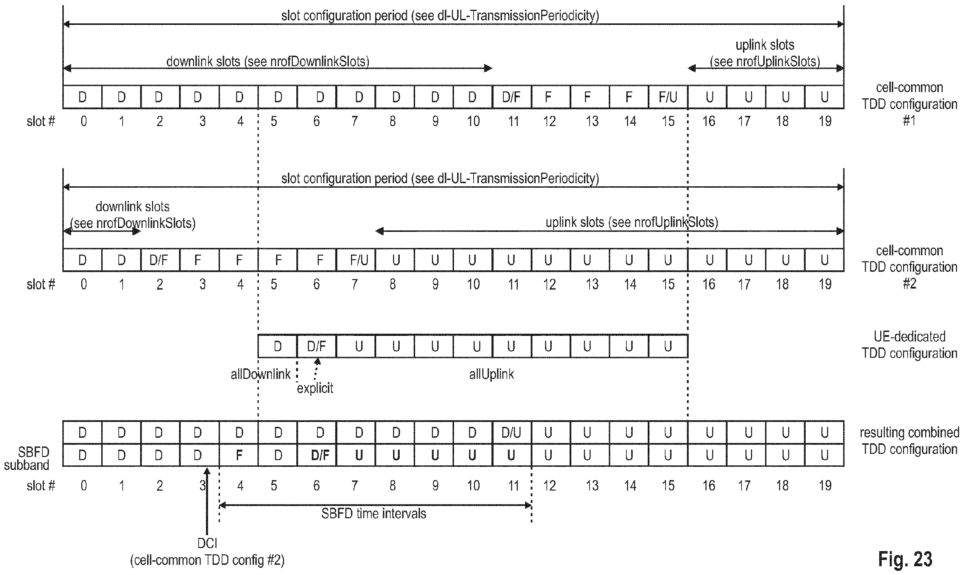

One exemplary implementation of this variant of the second scenario is illustrated in **Fig. 23****,** which assumes the same cell-common TDD configurations #1 and #2 as in Fig. 22. In addition, an exemplary UE-dedicated TDD is illustrated in Fig. 23, which exemplarily can include many uplink slots. In this example illustration, the SBFD resource is assumed to span the time slots 4 to 11. In detail, the resulting TDD communication directions in the non-SBFD frequency region in time slots 4 to 11 is the result of the combination of cell-common TDD configuration #1 and the UE-dedicated TDD configuration: D, D, D, D, D, D, D, D/U. On the other hand, in the SBFD frequency region in the time slots 4 to 11, the TDD communication directions are the result of the combination of cell-common TDD configuration #2 and the UE-dedicated TDD configuration: F, D, D/F, U, U, U, U, U.

Comparing the TDD communication directions during the SBFD time intervals for the SBFD subband and for the remaining frequency region, it is apparent that the TDD communication directions substantially change, including even opposite directions (D vs U). This facilitates a reconfiguration of the TDD communication directions within the SBFD resource according to this new improved TDD communication procedure.

According to a third scenario, the UE is configured with a plurality of different UE-dedicated TDD configurations. At first, it is exemplary assumed that the UE is not configured with a cell-common TDD configuration. However, a variant of the third scenario, to be described later, assumes that the UE is additionally configured with a cell-common TDD configuration in addition to the plurality of different UE-dedicated TDD configurations.

The above-denoted first set of TDD configurations may include one of the plurality of UE-dedicated TDD configurations. Correspondingly, the configuration switch indication of the DCI message can indicate another one of the plurality of UE-dedicated time-division configurations different from the already-used one, which then corresponds to the above-denoted second set of TDD configurations. As a result, the TDD communication direction(s) within the SBFD resource follows the indicated UE-dedicated TDD configuration and thus can be different from the TDD communication direction(s) outside the SBFD resource that follow the original UE-dedicated TDD configuration.

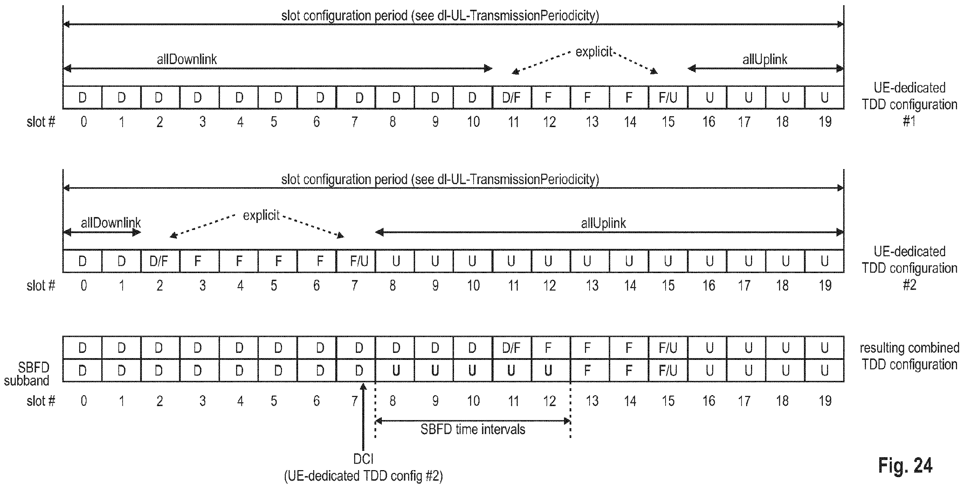

One exemplary implementation of the second scenario is illustrated in **Fig. 24****.** The third scenario has similar assumptions as the first and second scenarios for Fig. 21 and 22 respectively. Further, the UE is configured with two UE-dedicated TDD configurations #1 and #2, respectively defining different TDD communication directions in some of the time slots, particularly in time slots 2-15. For ease of explanation and illustration, the communication directions defined by the two UE-dedicated TDD configurations are the same as the communication directions defined by the two cell-common TDD configurations of the second scenario in Fig. 22.

It is exemplarily assumed that the UE primarily operates according to one UE-dedicated TDD configuration #1 alone. Again, the gNB transmits the DCI and the configuration switch indication in a timely manner, in this example indicating the UE-dedicated TDD configuration #2.

In the exemplary scenario of Fig. 24, the SBFD resource is exemplarily assumed to span time slots 8 to 12. In detail, the resulting TDD communication directions in the non-SBFD frequency region in time slots 8 to 12 are D, D, D, D/F, and F, corresponding to UE-dedicated TDD configuration #1. On the other hand, in the SBFD frequency region in time slots 8 to 12, the UE determines communication directions based on indicated UE-dedicated TDD configuration #2, thereby resulting in the communication directions U, U, U, U, and U.

Comparing the TDD communication directions during the SBFD time intervals for the SBFD subband and for the remaining frequency region, it is apparent that the TDD communication directions for all the time slots 8 to 12 directions are different, including even opposite directions (D vs U) in slots 8, 9, 10 and partly in slot 11 too.

If a potential collision of the UE of Fig. 24 with another UE (not illustrated) may occur in any these time slots 8-12, such a collision may be avoided by the changed communication directions of the SBFD resource.

As also mentioned above in connection with the second scenario, the improved TDD communication procedure may also be beneficial in connection with the UE-scheduling for Rel.18 UEs that support XDD.

According to a variant of the third scenario, the UE is not only configured with the two different UE-dedicated TDD configurations, but in addition also with a cell-common TDD configuration. This cell-common TDD configuration is thus to be also considered for the determination of the TDD communication directions (see e.g. Fig. 10). Correspondingly, the above denoted first set of TDD configurations to be used outside the SBFD resource includes one of the plurality of UE-dedicated TDD configurations in addition to cell-common TDD configuration, and also the above denoted second set of TDD configurations to be used within the SBFD resource includes another one of the plurality of UE-dedicated TDD configurations in addition to the cell-common TDD configuration. Therefore, the two sets are based on the same cell-common TDD configuration but differ from one another in the used UE-dedicated TDD configuration.

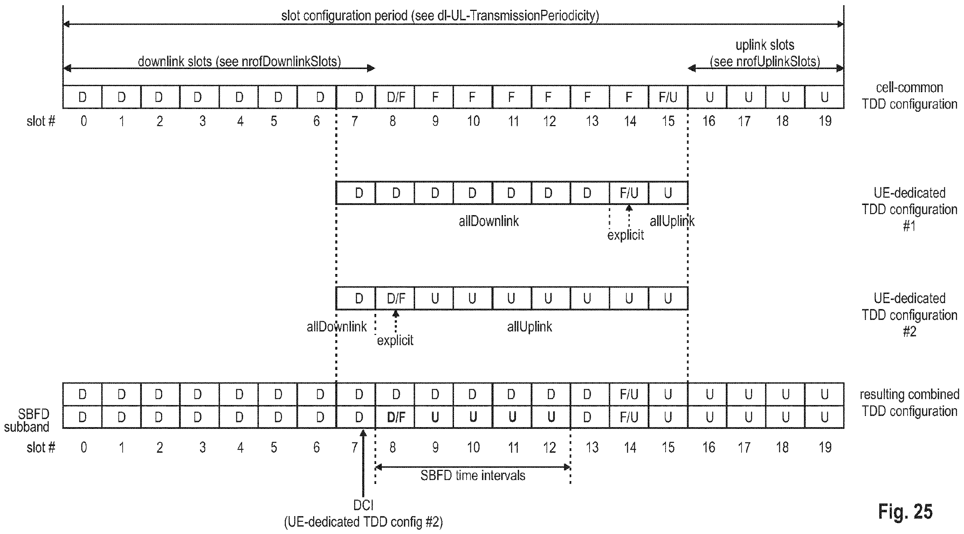

One exemplary implementation of this variant of the third scenario is illustrated in Fig. 25. Fig. 25 illustrates an exemplary cell-common TDD configuration with the illustrated communication directions. Further, Fig. 25 illustrates two different UE-dedicated TDD configurations #1 and #2. The two UE-dedicated TDD configurations differ from one another in that one includes many downlink slots (see #1) and the other includes many uplink slots (see #2), which introduces flexibility on how the communication directions within the SBFD resource can be switched.

Again, the gNB transmits the DCI and the configuration switch indication in a timely manner, in this example indicating the UE-dedicated TDD configuration #2.

As a result of this scenario of Fig. 25, the TDD communication directions outside the SBFD resource follow the combination of the cell-common TDD configuration with UE-dedicated TDD configuration #1. On the other hand, within the SBFD resource, the determination of the communication directions follows the indicated UE-dedicated TDD configuration #2 in combination with the cell-common TDD configuration. Due to the use of different UE-dedicated TDD configurations, the TDD communication direction(s) outside the SBFD resource can be different from the TDD communication directions within the SBFD resource.

In detail, the resulting TDD communication directions in the non-SBFD frequency region in time slots 8 to 12 are all D, following the D-heavy UE-dedicated TDD configuration #1. On the other hand, in the SBFD frequency region in time slots 8 to 12, the UE determines communication directions D/F, U, U, U, and U, respectively.

Comparing the TDD communication directions during the SBFD time intervals for the SBFD subband and for the remaining frequency region, it is apparent that the TDD communication directions for all the time slots 8 to 12 directions are different, including even opposite directions (D vs U) in slots 9 to 12.

If a potential collision of the UE of Fig. 25 with another UE (not illustrated) may occur in any these time slots 9-12, such a collision may be avoided by the changed communication directions of the SBFD resource.

The above three different exemplary scenarios differ with regard to the TDD configuration (s) based on which the TDD communication directions are determined.

In the above implementations and variants of the improved TDD communication procedures, it was assumed that the configuration switch indication is transmitted from the gNB to the UE in a DCI message. However, the use of a DCI message to convey the configuration switch indication is not essential.

Moreover, the following variants, which can be respectively combined with other of the implementations and variants of the improved TDD communication procedures, provide details on how the DCI message and configuration switch indication can be implemented.

According to one exemplary implementation, the DCI message can be of the DCI format 2_0, already known from current 5G-compliant procedures described above. As apparent from the current definition of DCI format 2_0, the DCI includes slot format indicators 1 to N, wherein each slot format indicator points to a table of a technical standard, associating different slot format indicator values with different slot formats (which communication directions D, U, F) to be used in a slot. In the current technical standards of 5G, the table can be found in Table 11.1.1-1 of TS 38.213 (see also the above table in the section regarding "*3*) *dynamic TDD configuration*")*.* The SFI (in particular its number of bits) allows to indicate however more values than needed to select the slot format for a slot. One or more of these spare values of the SFI could thus be used to indicate the intended TDD configuration. The DCI format 2_0, and particularly the SFI could thus be reused as the configuration switch indicator so as to indicate the TDD configuration for the SBFD resource.

Alternatively, while reusing the DCI format 2_0, it is also possible to include a separate field for the configuration switch indication (rather than the SFI as assumed above).

Still alternatively, a new DCI message can be created to carry the configuration switch indication.

In the above alternatives, the configuration switch indication can be of different number of bits, so as to be able to unambiguously indicate and distinguish between the different TDD configurations with which the UE can be configured. In some cases, one bit may suffice for the configuration switch indication.

In any of the above implementations, the DCI message and the configuration switch indication allow the gNB to provide a suitable indication to the UE on which TDD configuration should be used for determining the communication directions for an SBFD resource.

In the above explained implementations of the improved time-division communication procedures, it was described that the UE obtains information on the SBFD resource, e.g. from the gNB serving the UE. Further implementations of the improved time-division communication procedures, which can be combined with any of the other described implementations, provide further details on how the SBFD resource informing mechanism can be implemented.

According to one exemplary implementation, the information on the full-duplex (SBFD) resource may include information on one or more of:
- one or more full-duplex time periods of the full-duplex resource, and
- one or more full-duplex frequency regions of the full-duplex resource.

The improved TDD communication procedures thus are applicable to situations, in which the UE is informed about the SBFD time periods (e.g. slots) but not the SBFD frequency region (e.g. the subband), in which the UE is informed about the SBFD frequency region(s) but not the SBFD time periods, and in which the UE is informed about both the SBFD time periods and the SBFD frequency regions.

Several communication mechanisms can be used to provide the SBFD resource information from the gNB to the UE. According to one option, a system information broadcast can be used, according to which the necessary information is included in one system information block. Considering that the SBFD resource information is cell common, the system information broadcast allows to easily and effectively reach the UEs in the cell of the gNB.

According to another option, a message of the RRC protocol can be used, according to which the necessary information is included in the RRC message and transmitted separately to the UEs that require the SBFD resource information, e.g. the UEs supporting the improved TDD communication procedure.

In the above explained implementations of the improved time-division communication procedures, it was described how the UE can switch between different time-division configurations for the TDD communication, based on the received configuration switch indication. Moreover, further implementations of the improved time-division communication procedures, which can be combined with any of the other described implementations, relate to the subsequent processing at the UE and gNB after the switching, e.g. for how long the TDD communication in the SBFD resource follows the indicated time-division configuration and how the TDD communication may switch to still another time-division configuration such as the original time-division configuration.

According to a first implementation, the determination of the communication direction for the full-duplex resource based on the configuration switch indication is done until instructed otherwise; it is as such not necessarily limited in time but still kept under direct control of the gNB. As presented above, the configuration switch indication is transmitted by the gNB to indicate a particular TDD configuration to be used for determining the communication direction within the SBFD resource. This same mechanism can be repeatedly used to again change the communication direction within the SBFD resource, as needed.

In more detail, the TDD communication direction in the SBFD resource is determined based on the previous configuration switch indication (particularly the TDD configuration indicated therein) until receiving and following a new configuration switch indication. At some point, the gNB may decide that the TDD communication directions in the SBFD resource should be changed for the UE, e.g. because there is no collision with another UE anymore or because the character of the collision has changed. The gNB thus again determines a suitable TDD configuration for being indicated, sets the configuration switch indication according to the determined TDD configuration, and transmits the configuration switch indication with a DCI to the UE. Accordingly, the UE receives this further DCI with this further configuration switch indication from the gNB. Then, according to any one of the explained improved TDD communication procedures, the UE determines the communication direction in the SBFD resource based on at least the TDD configuration indicated by this new DCI and new configuration switch indication. Correspondingly, a third set of TDD configurations can be defined on which basis the communication directions for a subsequent SBFD resource is determined. The third set of TDD configurations at least includes the TDD configuration indicated by this new configuration switch indication.

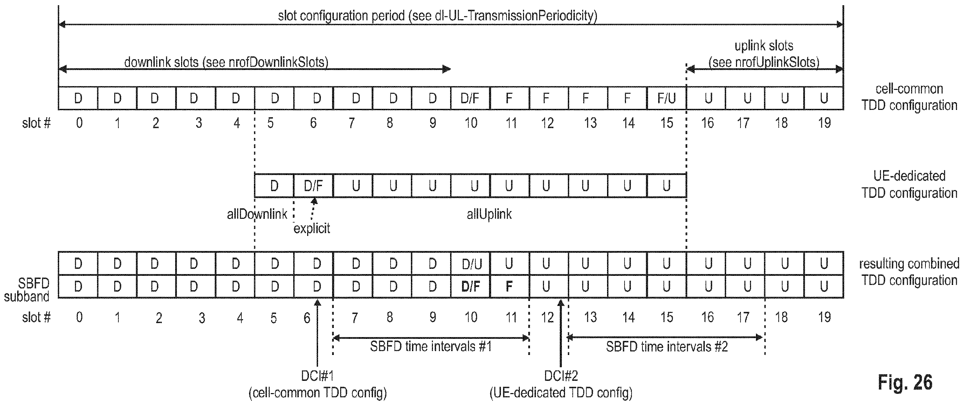

One example of this first implementation will be explained in connection with Fig. 26.In Fig. 26, the first implementation is applied in connection with the scenario as illustrated and discussed above in connection with Fig. 21. Correspondingly, the UE is configured with the cell-common TDD configuration and the UE-specific TDD configuration. Fig. 26 exemplarily assumes two separate SBFD resources separated in the time domain, wherein the first SBFD resource #1 spans the time slots 7 to 11, and the second SBFD resource #2 spans the time slots 13 to 17. Furthermore, Fig. 26 illustrates two separate DCI messages including respectively a configuration switch indication. The two configuration switch indications indicate a different TDD configuration to be followed within the SBFD resource. In this exemplary scenario, the first DCI #1 indicates the cell-common TDD configuration, such that the TDD communication directions for the SBFD resource #1 are determined based on the indicated cell-common TDD configuration. Correspondingly, the resulting TDD communication directions in time slots 7 to 11 are D, D, D, D/F and F, corresponding to the corresponding TDD communication directions defined by the cell-common TDD configuration. On the other hand, the TDD communication directions outside the SBFD resource #1, for instance in the non-SBFD frequency region of time slots 7 to 11, are determined based on a combination of the cell-common and UE-dedicated TDD configurations, resulting in the directions D, D, D, D/U, and U.

The second DCI #2 then indicates the UE-dedicated TDD configuration, such that the TDD communication directions for the SBFD resource #2 are determined based on the indicated UE-dedicated TDD configuration as well as on the cell-common TDD configuration. As a result, the TDD communication directions within and outside the SBFD resource are the same, here e.g. in time slots 13 to 17 all U.

Consequently, as already explained above, a repeated transmission of the DCI allows to repeatedly change how the determination of the TDD communication directions within the SBFD resource should be performed.

According to further implementations, the determination of the communication direction for the full-duplex resource based on the configuration switch indication is done for a limited time depending on a validity time period. These implementations of the improved TDD communication procedures are based on a previously-configured or fixed validity time period associated with the configuration switch indication and, different from the previous implementation, thus do not necessarily need a further DCI and configuration switch indication to change the TDD communication direction determination in the SBFD resource. Thus, these implementations can save overhead over the PDCCH, compared to the previous first implementation.

Conceptually, these further implementations involve that the determination of the TDD communication directions within the SBFD resource is done based on the received configuration switch indication (particularly the TDD configuration indicated therewith) until the corresponding validity time period expires.

When the validity time period expires, the TDD configuration previously indicated by the configuration switch indication for the SBFD resource is automatically switched to another TDD configuration (could be denoted fall-back TDD configuration). As a result, the UE, after expiry of the validity time period, determines the communication direction in the SBFD resource based on at least said other fall-back TDD configuration to which it is switched. Correspondingly, a third set of TDD configurations can be defined on which basis the communication direction for a subsequent SBFD resource is then determined, after the validity time period expires. The third set of TDD configurations at least includes the other fall-back TDD configuration.

The fall-back TDD configuration can be one of the plurality of TDD configurations with which the UE is configured, such as the previous TDD configuration before the DCI-based switch (denoted e.g. initial TDD configuration) or such as a TDD configuration different from the initial TDD configuration (e.g. a default TDD configuration).

There are several possibilities on how the validity time period is implemented, e.g. at which time the validity time period is supposed to begin. In one example, generally, the validity time period may being at a time that relates to the reception time of the DCI message with the configuration switch indication. Furthermore, the beginning of the validity time period can either be fixed in advance, or is configurable, e.g. by the gNB.

One option is that the validity time period begins with the beginning of the time slot in which the configuration switch indication is received or the beginning of the directly-subsequent time slot. However, these are simply two out of many different options.

Other exemplary options may use one of the following as the beginning of the validity time period:
- from the Nth slot/symbol after reception of the configuration switch indication,
- from the Nth slot/symbol after HARQ-ACK feedback transmission, which refers to the acknowledgement of the DCI, and is sent to base station to acknowledge gNB the DCI was corrected decoded.
- N can be 0, 1, 2, ..., which can be fixed or configured.

A further improvement of the TDD communication procedure relates to the use of the validity time period, and introduces the reset of the validity time period when the UE is scheduled for transmission or reception in the full-duplex resource. As a result, the validity time period is restarted and thus automatically extended, without the need of sending another DCI again. This allows to save overhead.

Furthermore, there are also several possibilities on how the length of the validity time period can be defined. According to one option, the validity time period can have a length that is based on a fixed value, e.g. specified by a firmware (operating system) of the UE. For instance, the validity time period is set by a Technical Standard, the definition of which is then encoded into the firmware based on which the UE operates.

According to still another option, the validity time period can adopt a cell-common value, applicable by all UEs in the cell. The cell-common value could be defined by the gNB and then transmitted to the UE(s), e.g. based on a system information broadcast (e.g. in a system information block) or using one or more suitable RRC messages.

According to still another option, the validity time period can adopt a UE-specific value, configured and applied by the specific UE for which it is intended. Accordingly, the UE-specific value could be defined by the gNB and then transmitted to the UE, e.g. in a suitable RRC message or a downlink control information, DCI, message.

According to further implementations, two or more of the above options on how to define the validity time period could be supported by a UE. In that case, as one example, the cell-common value of the validity time period could be broadcast in the cell for all UEs to receive. Then, the UE-specific value could be transmitted to the UE, overwriting the cell-common value obtained by broadcast.

In some of the above options, the validity time period value is defined by the gNB. The validity time period could e.g. be specified in number of slots, symbols or frames, or a combination of the above.

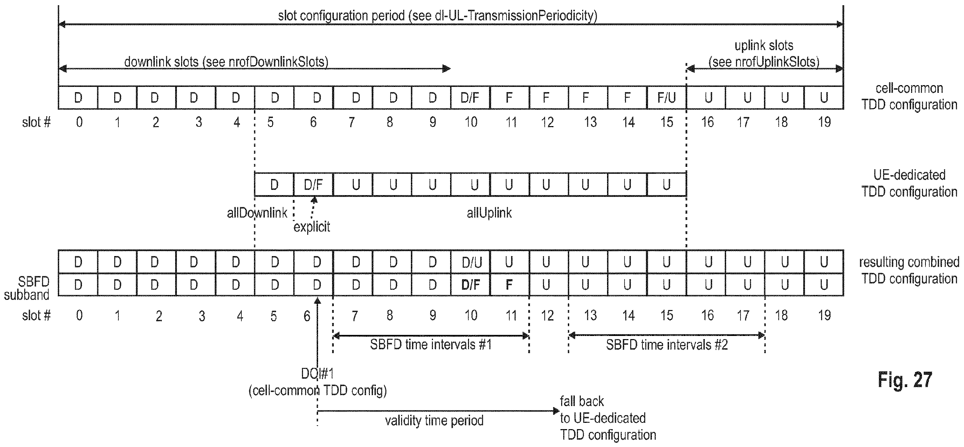

One example of these further implementations will be explained in connection with Fig. 27. In Fig. 27, these implementations are applied in connection with the scenario as illustrated and discussed above in connection with Fig. 21. Correspondingly, the UE is configured with the cell-common TDD configuration and the UE-specific TDD configuration. Fig. 27 exemplarily assumes two separate SBFD resources separated in the time domain, in the same manner as described already above for Fig. 26. Instead of using another DCI as done in Fig. 26, the implementation of Fig. 27 relies on a validity time period associated with the DCI carrying the configuration switch indication. The validity time period in this example is exemplarily assumed to start with the reception of the DCI and to have a length of 6 time slots.

Correspondingly, assuming that the DCI #1 is received in slot 6, the validity time period expires at slot 12, right before the beginning of the second SBFD resource #2. At the expiry of the validity time period, the determination of the TDD communication directions for a SBFD resource falls back to the UE-dedicated TDD configuration used before the DCI#1-triggered switch. The TDD communication directions for the SBFD resource #2 are thus determined based on the fall-back UE-dedicated TDD configuration as well as on the cell-common TDD configuration. As a result, the TDD communication directions within and outside the SBFD resource #2 are the same, here e.g. in time slots 13 to 17 all U.

Consequently, as already explained above, the use of a validity time period allows implementing, in a simple manner and without additional transmission overhead, a time limitation of the different determination of the TDD communication directions within the SBFD resource triggered by the DCI.

In the above, implementations of the improved TDD communication procedure have been described that make use of a validity time period to control the time during which the TDD communication directions for the SBFD resource are determined based on the DCI-indicated TDD configuration. According to a variant, which can be respectively combined with said implementations of the improved TDD communication procedures, the validity time period can be implemented as a timer, operated at the UE and base station. The timer would be configured with an expiry value that corresponds to the validity time period length (e.g. defined as discussed above). The timer is started at a time, according to any one of the options discussed above, e.g. at the beginning of the slot that is directly subsequent to the slot in which the DCI with the configuration switch indication is received. The timer can be stopped when it expires. In a further variant, the timer can be reset when the UE is scheduled for transmission or reception in the full-duplex resource (also discussed above generally).

The improved TDD communication procedures have been described above as determining the TDD communication directions within and outside the SBFD resource based on one or more different TDD configurations. The determining of a TDD communication direction follows a determination rule of how to combine the one or more TDD configurations so as to arrive at the final TDD communication directions in the respective time periods. How to determine a TDD communication direction can depend on which TDD configurations are present or configured to the UE. For instance, if there is only a cell-common TDD configuration, but no UE-specific TDD configuration, the determination rule involves that the TDD communication directions are determined based on only the cell-common TDD configuration. On the other hand, if there is a cell-common TDD configuration as well as a UE-specific TDD configuration, the determination rule involves that the TDD communication directions are determined based on both the cell-common TDD configuration and the-UE specific TDD configuration (e.g. where the UE-specific TDD configuration is able to override a flexible communication direction defined by the cell-common TDD configuration). Therefore, which determination rule should be followed for the determination of the TDD communication directions, depends on one of the plurality of TDD configurations with which the UE is configured, here are exemplarily denoted the decisive TDD configuration, being either the UE-specific TDD configuration if present, or being the cell-common TDD configuration if no UE-specific TDD configuration is present.

With reference to the different sets of TDD configurations to be used within and outside the SBFD resource, the decisive TDD configuration of the first and second sets of TDD configuration can be different or the same. For example, referring to the solution discussed in connection with Fig. 21, the decisive TDD configuration is different within and outside the SBFD resource, e.g. changing from the cell-common TDD configuration to the UE-specific TDD configuration or vice versa. Referring for instance to the solution discussed in connection with Fig. 22, the decisive TDD configuration changes as well, namely from one cell-common TDD configuration to another cell-common TDD configuration. On the other hand, now referring to the solution discussed in connection with Fig. 23, the decisive TDD configuration remains the same, namely the UE-dedicated TDD configuration irrespective of the change of the cell-common TDD configuration.

According to another improved TDD communication procedure, instead of an indication of a TDD configuration, the above-described DCI includes a suitable indication to indicate the determination rule to be followed by the UE within the SBFD resource, which can be a different determination rule than followed by the UE outside the SBFD resource. This improved TDD configuration procedure thus varies in the indication carried by the DCI. Other aspects already described above for the improved TDD communication procedure with the configuration switch indication can also be applied in the same manner for the present improved TDD communication procedure with the determination rule indication, e.g. one or more of the different scenarios as discussed in connection with Fig. 21-25, and of how the DCI and the indication can be implemented, and of how the time span during which the DCI indication is applied is controlled (see e.g. Fig. 26 and 27), etc.

In the described variants and implementations of the TDD communication procedure, it was assumed that the UE is configured with a plurality of TDD configurations. This can e.g. be implemented by providing the cell-common TDD configuration to the UE(s) using a system information broadcast and providing the UE-dedicated TDD configuration to the UE(s) using RRC signaling or DCI signaling.

Furthermore, the cell-common TDD configuration could be e.g. the same as the legacy cell-common TDD configuration discussed above in connection with the 5G IE *tdd-UL-DL-ConfigurationCommon.* In addition or alternatively, the cell-common TDD configuration could be a new configuration particularly to be used in the context of these improved TDD communication procedures. For instance, a new RRC information element *tdd-UL-DL-ConfigurationCommon-rel18* could be defined, e.g. following the structure of the corresponding legacy RRC IE *tdd-UL-DL-ConfigurationCommon*.

Furthermore, the UE-dedicated TDD configuration could be e.g. the same as the legacy UE-dedicated TDD configuration discussed above in connection with the 5G IE *tdd-UL-DL-ConfigurationDedicated.* In addition or alternatively, the UE-dedicated TDD configuration could be a new configuration particularly to be used in the context of these improved TDD communication procedures. For instance, a new RRC information element *tdd-UL-DL-ConfigurationDedicated-rel18* could be defined, e.g. following the structure of the corresponding legacy RRC IE *tdd-UL-DL-ConfigurationDedicated.*

As a result, either none or one or more than one of the TDD configurations for the improved TDD communication procedures could be defined based on new RRC information elements.

The use of new RRC information elements in the context of these improved TDD communication procedures may facilitate increasing the flexibility for the configurations, because the gNB is allowed to separately define the TDD configurations for those UEs supporting the improved TDD communication procedures, while non-supporting UEs can follow the other (legacy) TDD configurations defined by the legacy RRC information elements.

As one example, in the solution described in connection with Fig. 21, the two TDD configurations could reuse the legacy information elements, or use instead new information elements. Further, in the solution described in connection with Fig. 22, one or both of the two cell-common TDD configurations could be defined by new information elements. Further, in the solution described in connection with Fig. 24, one or both of the two UE-dedicated TDD configurations could be defined by new information elements.

As explained above for the improved TDD communication procedures, the determination of the TDD communication directions within the SBFD resource can be controlled to be different or the same as outside the SBFD resource. In other words, the separate TDD configuration operation for the SBFD resource is disabled or enabled according to the DCI and/or the validity time period mechanisms described above. For instance, the DCI with the configuration switch indication enables the different SBFD-resource-specific operation (following the indicated TDD configuration). Correspondingly, a subsequent DCI, or the expiry of the validity time period for the initial DCI, may disable the different SBFD-resource-specific operation, such that the determination of TDD communication directions within and outside the SBFD resource is the same again.

### Further Aspects

According to a first aspect, a user equipment, is provided that includes the following. A receiver of the UE receives a plurality of time-division configurations. A circuitry of the UE determines, for each of a plurality of time intervals, a communication direction, based on a first set of one or more time-division configurations among the previously-received plurality of time-division configurations. The receiver receives information on a full-duplex resource. The receiver receives a downlink control information, DCI, message, including a configuration switch indication. The configuration switch indication indicates one of the previously-received plurality of time-division configurations to be used. The circuitry determines, for each of one or more full-duplex time intervals of the full-duplex resource and respectively for a complete full-duplex frequency region of the full-duplex resource, a communication direction, based on a second set of one or more time-division configurations among the previously-received plurality of time-division configurations. The second set of time-division configurations at least includes the indicated time-division configuration.

According to a second aspect provided in addition to the first aspect, the indicated time-division configuration is to be used instead of a previously-used time-division configuration of the first set of time-division configurations. The second set of time-division configurations at least includes the indicated time-division configuration instead of the previously-used time-division configuration of the first set of time-division configurations.

According to a third aspect provided in addition to the first or second aspect, the plurality of time division configurations includes:
- a cell-common time-division configuration, and
- a UE-specific time-division configuration,

The first set of time-division configurations includes one of the cell-common time-division configuration and the UE-specific time-division configuration. The received configuration switch indication of the DCI message indicates one of the cell-common time-division configuration and the UE-specific time-division configuration.

In an optional implementation, the determining by the circuitry of the communication direction for the full-duplex resource is based on the cell-common time-division configuration or the UE-specific time-division configuration as indicated.

According to a fourth aspect provided in addition to one of the first to third aspects, the plurality of time-division configurations includes:
- a plurality of a cell-common time-division configurations.

The first set of time-division configurations includes a first of the plurality of cell-common time-division configurations. The received configuration switch indication of the DCI message indicates a second of the plurality of cell-common time-division configurations different from the first cell-common time-division configuration.

In an optional implementation, the determining by the circuitry of the communication direction for the full-duplex resource is based on the second set including the indicated second cell-common time-division configuration.

According to a fifth aspect, provided in addition to the fourth aspect, the plurality of time-division configurations further includes one UE-specific time-division configuration. The first set of time-division configurations includes the UE-specific time-division configuration, and the second set includes the UE-specific time-division indication.

According to a sixth aspect, provided in addition to one of the first to fifth aspects, the plurality of time division configurations includes:
- a plurality of a UE-specific time-division configurations.

The first set of time-division configurations includes a first of the plurality of UE-specific time-division configurations. The received configuration switch indication of the DCI message indicates a second of the plurality of UE-specific time-division configurations different from the first UE-specific time-division configuration.

In an optional implementation, the determining by the circuitry of the communication direction for the full-duplex resource is based on the second set including the indicated second UE-specific time-division configuration.

According to a seventh aspect, provided in addition to the sixth aspect, the plurality of time-division configurations further includes one cell-common time-division configuration. The first set of time-division configurations includes the cell-common time-division configuration, and the second set includes the cell-common time-division indication.

According to an eighth aspect provided in addition to one of the first to seventh aspects, the DCI message is of a format 2_0, and the configuration switch indication of the DCI message is included in a field for carrying a slot format indicator, which indicates one slot format among a plurality of slot formats. The value of the configuration switch indication is such that it indicates one of the plurality of time-division configurations rather than a slot format.

According to a ninth aspect provided in addition to any of the first to eighth aspects, the determination of a communication direction for the full-duplex resource is performed by the UE based on the configuration switch indication received in the DCI message until:
- the reception of a further DCI message, including a further configuration switch indication indicating one of the previously-received plurality of time-division configurations.

The circuitry determines for each of one or more full-duplex time intervals of the full-duplex resource and respectively for the complete full-duplex frequency region of the full-duplex resource, a communication direction, based on a third set of one or more time-division configurations among the previously-received plurality of time-division configurations. The third set of time-division configurations at least includes the time-division configuration indicated by the further configuration switch indication.

According to a tenth aspect provided in addition to one of the first to ninth aspects, the determination of a communication direction for the full-duplex resource is performed by the UE based on the configuration switch indication received in the DCI message until:
- a validity time period associated with the configuration switch indication received in the DCI message expires.

In an optional implementation, when the validity time period associated with the configuration switch indication expires, the circuitry determines for each of one or more full-duplex time intervals of the full-duplex resource and respectively for the complete full-duplex frequency region of the full-duplex resource, a communication direction, based on a third set of one or more time-division configurations among the previously-received plurality of time-division configurations. The third set of time-division configurations at least includes a fall-back time-division configuration instead of the time-division configuration indicated by the configuration switch indication.

In an optional implementation, the fall-back time-division configuration is one of the plurality of time-division configurations. Further optionally, the fall-back time-division configuration is the same as or different from the previously-used time-division configuration in the first set of time-division configurations.

In a still further optional implementation, the circuitry determines that the validity time period begins at a time related to the received DCI message, including the configuration switch indication, such as the time slot in which the DCI message is received.

According to an eleventh aspect provided in addition to the tenth aspect, the circuity determines the validity time period based on one or more of:
- a fixed value, specified by a firmware of the UE,
- a cell-common value, optionally configured to the UE based on a Radio Resource Control, RRC, message or based on a System Information Block, SIB, message, and
- a UE-specific value, optionally configured to the UE based on a downlink control information message.

In an optional implementation, the validity time period is started again, when the UE is scheduled for uplink transmission or downlink reception in the full-duplex resource.

According to a twelfth aspect, provided in addition to the tenth or eleventh aspects, the circuitry operates a timer for the validity time period. The timer is configured with an expiry value corresponding to the validity time period. The timer is started at a time related to the received DCI message, including the configuration switch indication, such as the time slot in which the DCI message is received.

In an optional implementation, the timer is reset when the UE is scheduled for uplink transmission or downlink reception in the full-duplex resource.

According to a thirteenth aspect, provided in addition to one of the first to twelfth aspects, the determining by the circuitry of a communication direction follows a determination rule of how to combine the one or more time division configurations in a respective set of time-division configurations. The determination rule to be followed is specified by a decisive time-division configuration among the time-division configurations of the respective set. The decisive time division configurations of the first set and the second set are the same or different.

In an optional implementation, the decisive time-division configuration is a UE-specific time-division configuration, if the UE-specific time-division configuration is in the respective set of time-division configurations to be used by the circuitry for determining the communication direction. A determination rule associated with the UE-specific time-division configuration is such that the UE-specific time-division configuration configures, for one or more time intervals among the time intervals of the cell-common time-division configuration, a different communication direction than configured by the cell-common time-division configuration.

In an optional implementation, the decisive time-division configuration is a cell-common time-division configuration, if no UE-specific time-division configuration is in the respective set of time-division configurations to be used by the circuitry for determining the communication direction. A determination rule associated with the cell-common time-division configuration is solely based on the cell-common time-division configuration.

According to a fourteenth aspect, provided in addition to one of the first to thirteenth aspects, the information on the full-duplex resource includes information on one or more of:
- one or more full-duplex time periods of the full-duplex resource, and
- one or more full-duplex frequency regions of the full-duplex resource.

In an optional implementation, the information on the full-duplex resource is received in one or more of a system information broadcast and a message of a Radio Resource Control, RRC, protocol.

According to a fifteenth aspect, provided in addition to one of the first to fourteenth aspects, a time-division configuration configures the communication direction, for each of one or more time intervals of said time-division configuration, to be one of an uplink direction, or a downlink direction, or a flexible direction.

According to a sixteenth aspect, provided in addition to one of the first to fifteenth aspects, the receiver and a transmitter, in operation, perform communication based on the determined communication directions, optionally wherein the communication is with a base station serving the UE

According to a seventeenth aspect, a method is provided comprising the following steps performed by a user equipment, UE:
receiving a plurality of time-division configurations,
determining, for each of a plurality of time intervals, a communication direction, based on a first set of one or more time-division configurations among the previously-received plurality of time-division configurations,
receiving information on a full-duplex resource,
receiving a downlink control information, DCI, message, including a configuration switch indication, wherein the configuration switch indication indicates one of the previously-received plurality of time-division configurations to be used, and
determining, for each of one or more full-duplex time intervals of the full-duplex resource and respectively for a complete full-duplex frequency region of the full-duplex resource, a communication direction, based on a second set of one or more time-division configurations among the previously-received plurality of time-division configurations, wherein the second set of time-division configurations at least includes the indicated time-division configuration.

According to an eighteenth aspect, a base station is provided comprising the following. A transmitter of the base station transmits a plurality of time-division configurations. Circuitry of the base station determines, for each of a plurality of time intervals, a communication direction, based on a first set of one or more time-division configurations among the previously-transmitted plurality of time-division configurations. The transmitter transmits information on a full-duplex resource. The circuitry determines one of the previously-transmitted plurality of time-division configurations to be used for the full-duplex resource. The transmitter transmits a downlink control information, DCI, message, including a configuration switch indication, wherein the configuration switch indication indicates the determined one time-division configuration. The circuitry determines, for each of one or more full-duplex time intervals of the full-duplex resource and respectively for a complete full-duplex frequency region of the full-duplex resource, a communication direction, based on a second set of one or more time-division configurations among the previously-transmitted plurality of time-division configurations. The second set of time-division configurations at least includes the indicated time-division configuration.

According to a nineteenth aspect, a method is provided comprising the following steps performed by a base station:
transmitting a plurality of time-division configurations,
determining, for each of a plurality of time intervals, a communication direction, based on a first set of one or more time-division configurations among the previously-transmitted plurality of time-division configurations,
transmitting information on a full-duplex resource,
determining one of the previously-transmitted plurality of time-division configurations to be used for the full-duplex resource,
transmitting a downlink control information, DCI, message, including a configuration switch indication, wherein the configuration switch indication indicates the determined one time-division configuration, and
determining, for each of one or more full-duplex time intervals of the full-duplex resource and respectively for a complete full-duplex frequency region of the full-duplex resource, a communication direction, based on a second set of one or more time-division configurations among the previously-transmitted plurality of time-division configurations, wherein the second set of time-division configurations at least includes the indicated time-division configuration.

According to a 20^{th} aspect, an integrated circuit is provided, which, in operation, controls a process of a user equipment, UE, the process comprising the following steps performed by the UE:
receiving a plurality of time-division configurations,
determining, for each of a plurality of time intervals, a communication direction, based on a first set of one or more time-division configurations among the previously-received plurality of time-division configurations,
receiving information on a full-duplex resource,
receiving a downlink control information, DCI, message, including a configuration switch indication, wherein the configuration switch indication indicates one of the previously-received plurality of time-division configurations to be used, and
determining, for each of one or more full-duplex time intervals of the full-duplex resource and respectively for a complete full-duplex frequency region of the full-duplex resource, a communication direction, based on a second set of one or more time-division configurations among the previously-received plurality of time-division configurations, wherein the second set of time-division configurations at least includes the indicated time-division configuration.

According to a 21^{st} aspect, an integrated circuit is provided, which, in operation, controls a process of a base station, the process comprising the following steps performed by the base station:
transmitting a plurality of time-division configurations,
determining, for each of a plurality of time intervals, a communication direction, based on a first set of one or more time-division configurations among the previously-transmitted plurality of time-division configurations,
transmitting information on a full-duplex resource,
determining one of the previously-transmitted plurality of time-division configurations to be used for the full-duplex resource,
transmitting a downlink control information, DCI, message, including a configuration switch indication, wherein the configuration switch indication indicates the determined one time-division configuration, and
determining, for each of one or more full-duplex time intervals of the full-duplex resource and respectively for a complete full-duplex frequency region of the full-duplex resource, a communication direction, based on a second set of one or more time-division configurations among the previously-transmitted plurality of time-division configurations, wherein the second set of time-division configurations at least includes the indicated time-division configuration.

### Further Variants, including Hardware and Software Implementation of the present disclosure

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC (integrated circuit), a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT).

The communication may include exchanging data through, for example, a cellular system, a wireless LAN system, a satellite system, etc., and various combinations thereof.

The communication apparatus may comprise a device such as a controller or a sensor, which is coupled to a communication device performing a function of communication described in the present disclosure. For example, the communication apparatus may comprise a controller or a sensor that generates control signals or data signals, which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

### (Control Signals)

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

### (Base Station)

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may be adopted instead of a base station. The base station may be a relay apparatus that relays communication between a higher node and a terminal. The base station may be a roadside unit as well.

### (Uplink/Downlink/Sidelink)

The present disclosure may be applied to any of uplink, downlink and sidelink.

The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

### (Data Channels/Control Channels)

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

### (Reference Signals)

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

### (Time Intervals)

In the present disclosure, time resource units are not limited to one or a combination of slots and symbols, and may be time resource units, such as frames, superframes, subframes, slots, time slot subslots, minislots, or time resource units, such as symbols, Orthogonal Frequency Division Multiplexing (OFDM) symbols, Single Carrier-Frequency Division Multiplexing Access (SC-FDMA) symbols, or other time resource units. The number of symbols included in one slot is not limited to any number of symbols exemplified in the embodiment(s) described above, and may be other numbers of symbols.

### (Frequency Bands)

The present disclosure may be applied to any of a licensed band and an unlicensed band.

### (Communication)

The present disclosure may be applied to any of communication between a base station and a terminal (Uu-link communication), communication between a terminal and a terminal (Sidelink communication), and Vehicle to Everything (V2X) communication. The channels in the present disclosure may be replaced with PSCCH, PSSCH, Physical Sidelink Feedback Channel (PSFCH), PSBCH, PDCCH, PUCCH, PDSCH, PUSCH, and PBCH.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

### (Antenna Ports)

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

Further, the various embodiments may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc. It should be further noted that the individual features of the different embodiments may individually or in arbitrary combination be subject matter to another embodiment.

It would be appreciated by a person skilled in the art that numerous variations and/or modifications may be made to the present disclosure as shown in the specific embodiments. The present embodiments are, therefore, to be considered in all respects to be illustrative and not restrictive.

## Claims

1. A user equipment, UE, comprising:
a receiver, which in operation, receives a plurality of time-division configurations,
a circuitry, which in operation, determines, for each of a plurality of time intervals, a communication direction, based on a first set of one or more time-division configurations among the previously-received plurality of time-division configurations,
the receiver, which in operation, receives information on a full-duplex resource,
the receiver, which in operation, receives a downlink control information, DCI, message, including a configuration switch indication, wherein the configuration switch indication indicates one of the previously-received plurality of time-division configurations to be used, and
the circuitry, which in operation, determines, for each of one or more full-duplex time intervals of the full-duplex resource and respectively for a complete full-duplex frequency region of the full-duplex resource, a communication direction, based on a second set of one or more time-division configurations among the previously-received plurality of time-division configurations , wherein the second set of time-division configurations at least includes the indicated time-division configuration.

2. The UE according to claim 1, wherein the indicated time-division configuration is to be used instead of a previously-used time-division configuration of the first set of time-division configurations, and wherein the second set of time-division configurations at least includes the indicated time-division configuration instead of the previously-used time-division configuration of the first set of time-division configurations.

3. The UE according to claim 1 or 2, wherein the plurality of time division configurations includes:
∘ a cell-common time-division configuration, and
∘ a UE-specific time-division configuration,
wherein the first set of time-division configurations includes one of the cell-common time-division configuration and the UE-specific time-division configuration, wherein the received configuration switch indication of the DCI message indicates one of the cell-common time-division configuration and the UE-specific time-division configuration,
optionally wherein the determining by the circuitry of the communication direction for the full-duplex resource is based on the cell-common time-division configuration or the UE-specific time-division configuration as indicated.

4. The UE according to any one of claims 1 to 3, wherein the plurality of time-division configurations includes:
∘ a plurality of a cell-common time-division configurations, and
wherein the first set of time-division configurations includes a first of the plurality of cell-common time-division configurations,
wherein the received configuration switch indication of the DCI message indicates a second of the plurality of cell-common time-division configurations different from the first cell-common time-division configuration,
optionally wherein the determining by the circuitry of the communication direction for the full-duplex resource is based on the second set including the indicated second cell-common time-division configuration.

5. The UE according to claim 4, wherein the plurality of time-division configurations further includes one UE-specific time-division configuration, and wherein the first set of time-division configurations includes the UE-specific time-division configuration, and the second set includes the UE-specific time-division indication.

6. The UE according to any one of claims 1 to 5, wherein the plurality of time division configurations includes:
∘ a plurality of a UE-specific time-division configurations, and
wherein the first set of time-division configurations includes a first of the plurality of UE-specific time-division configurations,
wherein the received configuration switch indication of the DCI message indicates a second of the plurality of UE-specific time-division configurations different from the first UE-specific time-division configuration,
optionally wherein the determining by the circuitry of the communication direction for the full-duplex resource is based on the second set including the indicated second UE-specific time-division configuration.

7. The UE according to claim 6, wherein the plurality of time-division configurations further includes one cell-common time-division configuration, and wherein the first set of time-division configurations includes the cell-common time-division configuration, and the second set includes the cell-common time-division indication.

8. The UE according to any one of claims 1 to 7, wherein the DCI message is of a format 2_0, and the configuration switch indication of the DCI message is included in a field for carrying a slot format indicator, which indicates one slot format among a plurality of slot formats, wherein the value of the configuration switch indication is such that it indicates one of the plurality of time-division configurations rather than a slot format.

9. The UE according to any one of claims 1 to 8, wherein the determination of a communication direction for the full-duplex resource is performed by the UE based on the configuration switch indication received in the DCI message until:
∘ the reception of a further DCI message, including a further configuration switch indication indicating one of the previously-received plurality of time-division configurations,
wherein the circuitry, in operation, determines for each of one or more full-duplex time intervals of the full-duplex resource and respectively for the complete full-duplex frequency region of the full-duplex resource, a communication direction, based on a third set of one or more time-division configurations among the previously-received plurality of time-division configurations, wherein the third set of time-division configurations at least includes the time-division configuration indicated by the further configuration switch indication.

10. The UE according to one of claims 1 to 9, wherein the determination of a communication direction for the full-duplex resource is performed by the UE based on the configuration switch indication received in the DCI message until:
∘ a validity time period associated with the configuration switch indication received in the DCI message expires,
optionally wherein, when the validity time period associated with the configuration switch indication expires, the circuitry, in operation, determines for each of one or more full-duplex time intervals of the full-duplex resource and respectively for the complete full-duplex frequency region of the full-duplex resource, a communication direction, based on a third set of one or more time-division configurations among the previously-received plurality of time-division configurations, wherein the third set of time-division configurations at least includes a fall-back time-division configuration instead of the time-division configuration indicated by the configuration switch indication,
optionally wherein the fall-back time-division configuration is one of the plurality of time-division configurations, optionally wherein the fall-back time-division configuration is the same as or different from the previously-used time-division configuration in the first set of time-division configurations,
optionally wherein the circuitry, in operation, determines that the validity time period begins at a time related to the received DCI message, including the configuration switch indication, such as the time slot in which the DCI message is received.

11. The UE according to claim 10, wherein the circuity, in operation, determines the validity time period based on one or more of:
∘ a fixed value, specified by a firmware of the UE,
∘ a cell-common value, optionally configured to the UE based on a Radio Resource Control, RRC, message or based on a System Information Block, SIB, message, and
∘ a UE-specific value, optionally configured to the UE based on a downlink control information message,
optionally wherein the validity time period is started again, when the UE is scheduled for uplink transmission or downlink reception in the full-duplex resource.

12. The UE according to claim 10 or 11, wherein the circuitry, in operation, operates a timer for the validity time period, wherein the timer is configured with an expiry value corresponding to the validity time period, and wherein the timer is started at a time related to the received DCI message, including the configuration switch indication, such as the time slot in which the DCI message is received,
optionally wherein the timer is reset when the UE is scheduled for uplink transmission or downlink reception in the full-duplex resource.

13. The UE according to any one of claims 1 to 12, wherein the determining by the circuitry of a communication direction follows a determination rule of how to combine the one or more time division configurations in a respective set of time-division configurations, wherein the determination rule to be followed is specified by a decisive time-division configuration among the time-division configurations of the respective set, and wherein the decisive time division configurations of the first set and the second set are the same or different,
optionally wherein the decisive time-division configuration is a UE-specific time-division configuration, if the UE-specific time-division configuration is in the respective set of time-division configurations to be used by the circuitry for determining the communication direction, wherein a determination rule associated with the UE-specific time-division configuration is such that the UE-specific time-division configuration configures, for one or more time intervals among the time intervals of the cell-common time-division configuration, a different communication direction than configured by the cell-common time-division configuration,
optionally wherein the decisive time-division configuration is a cell-common time-division configuration, if no UE-specific time-division configuration is in the respective set of time-division configurations to be used by the circuitry for determining the communication direction, wherein a determination rule associated with the cell-common time-division configuration is solely based on the cell-common time-division configuration.

14. The UE according to any one of claims 1 to 13, wherein the information on the full-duplex resource includes information on one or more of:
∘ one or more full-duplex time periods of the full-duplex resource, and
∘ one or more full-duplex frequency regions of the full-duplex resource,
optionally wherein the information on the full-duplex resource is received in one or more of a system information broadcast and a message of a Radio Resource Control, RRC, protocol.

15. A base station comprising:
a transmitter, which in operation, transmits a plurality of time-division configurations,
circuitry, which in operation, determines, for each of a plurality of time intervals, a communication direction, based on a first set of one or more time-division configurations among the previously-transmitted plurality of time-division configurations,
the transmitter, which in operation, transmits information on a full-duplex resource,
the circuitry, which in operation, determines one of the previously-transmitted plurality of time-division configurations to be used for the full-duplex resource,
the transmitter, which in operation, transmits a downlink control information, DCI, message, including a configuration switch indication, wherein the configuration switch indication indicates the determined one time-division configuration, and
the circuitry, which in operation, determines, for each of one or more full-duplex time intervals of the full-duplex resource and respectively for a complete full-duplex frequency region of the full-duplex resource, a communication direction, based on a second set of one or more time-division configurations among the previously-transmitted plurality of time-division configurations, wherein the second set of time-division configurations at least includes the indicated time-division configuration.
